# EUROPEAN PATENT APPLICATION

(11) **EP 4 804 446 A1**
(43) Date of publication of application: **09.09.2026**
(21) Application number: 23957365.2
(22) Date of filing: 03.11.2023
(51) Int. Cl.: H04L 5/00

(54) **CONTROL CHANNEL TRANSMISSION METHODS AND APPARATUSES, DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: SHI, Zhihua, Dongguan, Guangdong 523860 (CN); XIAO, Han, Dongguan, Guangdong 523860 (CN); TIAN, Wenqiang, Dongguan, Guangdong 523860 (CN)
(74) Representative: Novagraaf Technologies
(86) International application number: PCT/CN2023/129785
(87) International publication number: WO 2025/091509

(57) **Abstract**

Control channel transmission methods and apparatuses, a device and a storage medium, belonging to the technical field of mobile communication. A method is executed by a first device, and comprises: receiving indication information (310), the indication information being used for indicating a first demodulation reference signal (DMRS) mode or a first control channel type, the first control channel type corresponding to the first DMRS mode, and the first DMRS mode being one of a plurality of DMRS modes; and on the basis of the DMRS mode indicated by the indication information, performing transmission of a control channel (320).

## Description

### TECHNICAL FIELD

The present disclosure relates to the field of mobile communication technology, and particularly to a method and apparatus for control channel transmission, a device and storage medium thereof.

### RELATED ART

A demodulation reference signal (DMRS) is a reference signal used for uplink and downlink demodulation.

In the related art, for a control channel, a DMRS is carried in pre-configured resource positions within a resource of the control channel.

### SUMMARY

Embodiments of the present disclosure provide a method and apparatus for control channel transmission, and a device and storage medium thereof. The technical solution is as follows:

According to an aspect, the embodiments of the present disclosure provide a method for control channel transmission. The method is performed by a first device, and the method includes:
receiving indication information, wherein the indication information is used to indicate a first DMRS pattern or a first control channel type, wherein the first control channel type corresponds to the first DMRS pattern, and the first DMRS pattern is one of a plurality of DMRS patterns; and
transmitting a control channel according to a DMRS pattern indicated by the indication information.

According to an aspect, the embodiments of the present disclosure provide a method for control channel transmission. The method is performed by a second device, and the method includes:
transmitting indication information to a first device, wherein the indication information is used to indicate a first DMRS pattern or a first control channel type, wherein the first control channel type corresponds to the first DMRS pattern, the first DMRS pattern is one of a plurality of DMRS patterns, and the indication information is used to instruct the first device to transmit a control channel according to a DMRS pattern indicated by the indication information.

According to another aspect, the embodiments of the present disclosure provide an apparatus for control channel transmission. The apparatus includes:
a receiving module, configured to receive indication information, wherein the indication information is used to indicate a first DMRS pattern or a first control channel type, wherein the first control channel type corresponds to the first DMRS pattern, and the first DMRS pattern is one of a plurality of DMRS patterns; and
a transmission module, configured to transmit a control channel according to a DMRS pattern indicated by the indication information.

According to another aspect, the embodiments of the present disclosure provide an apparatus for control channel transmission. The apparatus includes:
a transmitting module, configured to transmit indication information to a first device, wherein the indication information is used to indicate a first DMRS pattern or a first control channel type, wherein the first control channel type corresponds to the first DMRS pattern, the first DMRS pattern is one of a plurality of DMRS patterns, and the indication information is used to instruct the first device to transmit a control channel according to a DMRS pattern indicated by the indication information.

According to another aspect, the embodiments of the present disclosure provide a communication device. The communication device includes a processor, a memory, and a transceiver;
the memory stores a computer program, wherein the computer program, when run by the processor, causes the communication device to perform the method for control channel transmission as described above.

According to yet another aspect, the embodiments of the present disclosure further provide a computer-readable storage medium, in which a computer program is stored. The computer program, when loaded and run by a processor, causes the processor to perform the method for control channel transmission as described above.

According to yet another aspect, the present disclosure also provides a chip. The chip includes an integrated circuit and firmware arranged within the integrated circuit. The chip, when running in a communication device, causes the communication device to perform the method for control channel transmission as described above.

According to yet another aspect, the present disclosure provides a computer program product. The computer program product includes one or more computer instructions stored in a computer-readable storage medium. The one or more computer instructions, when read from the computer-readable storage medium and executed by a processor of a communication device, cause the communication device to perform the method for control channel transmission as described above.

According to yet another aspect, the present disclosure provides a computer program. The computer program, when executed by a processor of a communication device, causes the communication device to perform the method for control channel transmission as described above.

The embodiments of the present disclosure provide a transmission scheme for control channels. The first device may receive indication information that is used to indicate the first DMRS pattern in a plurality of DMRS patterns, or to indicate the first control channel type corresponding to the first DMRS pattern. When transmitting a control channel subsequently, the first device transmits the control channel according to the DMRS pattern indicated by the indication information, which ensures the flexibility of the DMRS transmission in the control channel.

### BRIEF DESCRIPTION OF DRAWINGS

FIG. 1 is a schematic diagram of the architecture of a communication system according to an embodiment of the present disclosure.
FIG. 2 is a schematic diagram of DMRS types involved in the present disclosure.
FIG. 3 is a flowchart of a method for control channel transmission according to an embodiment of the present disclosure.
FIG. 4 is a flowchart of a method for control channel transmission according to an embodiment of the present disclosure.
FIG. 5 is a flowchart of a method for control channel transmission according to an embodiment of the present disclosure.
FIG. 6 is a flowchart of a method for control channel transmission according to an embodiment of the present disclosure.
FIG. 7 is a block diagram of an apparatus for control channel transmission according to an embodiment of the present disclosure.
FIG. 8 is a block diagram of an apparatus for control channel transmission according to an embodiment of the present disclosure.
FIG. 9 is a structural schematic diagram of a communication device according to an embodiment of the present disclosure.

### DETAILED DESCRIPTION

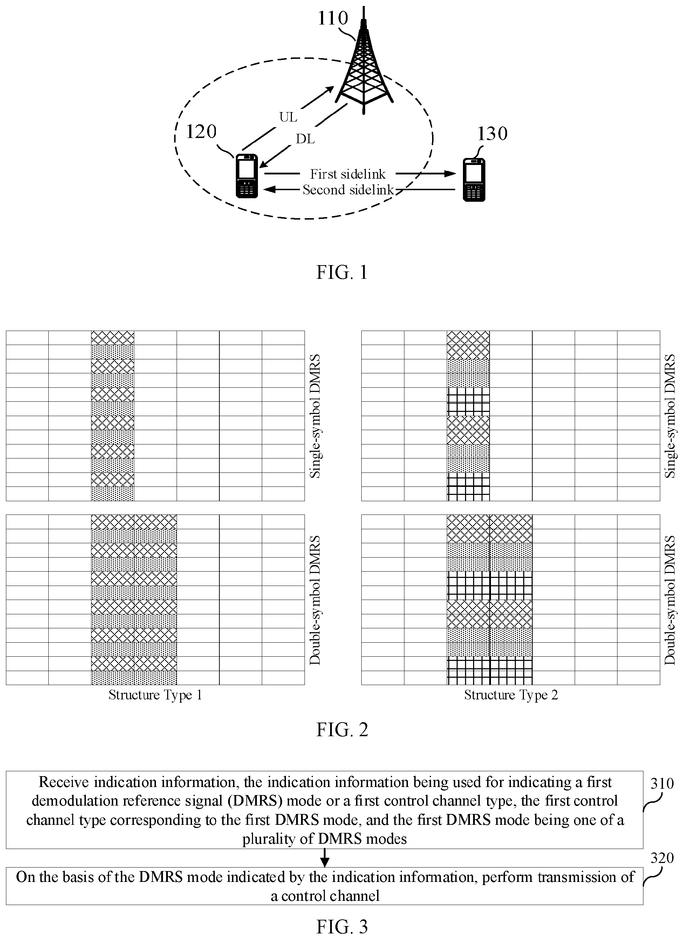

FIG. 1 is a schematic diagram of a communication system involved in exemplary embodiments of the present disclosure. The communication system includes a network device 110 and a terminal device 120, and/or a terminal device 120 and a terminal device 130, which are not limited in the present disclosure.

The network device 110 in the present disclosure provides wireless communication functions, and includes but is not limited to: an evolved Node B (eNB), a radio network controller (RNC), a Node-B (NB), a base station controller (BSC), a base transceiver station (BTS), a home evolved Node-B (or a home Node-B (HNB)), a baseband unit (BBU), an access point (AP) in a wireless fidelity (Wi-Fi) system, a wireless relay node, a wireless backhaul node, a transmission point (TP), or a transmission and reception point (TRP), etc. The network device 110 may also be a next generation Node-B (gNB) or a transmission point (TRP or TP) in a 5^{th} generation (5G) mobile communication system, or one antenna panel or a group of (including a plurality of antenna panels) antenna panels of a base station in the 5G system, or a network node constituting a gNB or a transmission point, such as a BBU or a distributed unit (DU), etc. The network device 110 may also refer to a base station in a beyond-fifth generation (B5G) or 6^{th} generation (6G) mobile communication system, or a core network (CN), fronthaul, backhaul, a radio access network (RAN), a network slice, etc.,; or a serving cell, a primary cell (PCell), a primary secondary cell (PSCell), a special cell (SpCell), a secondary cell (SCell), or a neighboring cell of a terminal device, or the like.

At least one of the terminal device 120 or the terminal device 130 in the present disclosure is also referred to as a user equipment (UE), an access terminal, a subscriber unit, a subscriber station, a mobile station, a remote station, a remote terminal, a mobile device, a user terminal, a terminal, a wireless communication device, a user agent, or a user device. The terminal device includes but is not limited to: a handheld device, a wearable device, a vehicle-mounted device, and an Internet of things (IoT) device, such as a mobile phone, a tablet computer, an e-book reader, a laptop computer, a desktop computer, a TV, a game console, a mobile Internet device (MID), an augmented reality (AR) terminal, a virtual reality (VR) terminal, a mixed reality (MR) terminal, a wearable device, a handle, an electronic tag, a controller, a wireless terminal in industrial control, a wireless terminal in self-driving, a wireless terminal in remote medical technology, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a wireless local loop (WLL) station, a personal digital assistant (PDA), a set-top box (STB), or a customer premise equipment (CPE), or the like.

The network device 110 and the terminal device 120 communicate with each other via an air interface technology, such as a Uu interface.

Illustratively, there are two communication scenarios between the network device 110 and the terminal device 120: an uplink communication scenario and a downlink communication scenario. The uplink communication refers to transmitting signals to the network device 110. The downlink communication refers to transmitting signals to the terminal device 120.

The terminal device 120 and the terminal device 130 communicate with each other via an air interface technology, such as a PC5 interface.

In some embodiments, two communication scenarios are present between the terminal device 120 and the terminal device 130, namely, a first sidelink communication scenario and a second sidelink communication scenario. The first sidelink communication refers to transmitting signals to the terminal device 130. The second sidelink communication refers to transmitting signals to the terminal device 120.

Both the terminal device 120 and the terminal device 130 are within the network coverage and located in the same cell, or both the terminal device 120 and the terminal device 130 are within the network coverage but located in different cells, or the terminal device 120 is within the network coverage but the terminal device 130 is outside the network coverage.

The technical solutions according to the embodiments of the present disclosure is applicable to various communication systems, such as a global system of mobile communication (GSM) system, a code-division multiple access (CDMA) system, a wideband code-division multiple access (WCDMA) system, a general packet radio service (GPRS), a long-term evolution (LTE) system, an LTE frequency-division duplex (FDD) system, an LTE time-division duplex (TDD) system, an advanced LTE (LTE-A) system, a universal mobile telecommunication system (UMTS), a worldwide interoperability for microwave access (WiMAX) communication system, a 5G mobile communication system, a new radio (NR) system, an evolved system of the NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN), a Wi-Fi system, a cellular IoT system, or a cellular passive IoT system. The technical solutions according to the embodiments of the present disclosure may also be applied to a subsequent evolved system of the 5G NR system, as well as to B5G, 6G, and subsequent evolved systems. In some embodiments of the present disclosure, "NR" may also be referred to as a 5G NR system or a 5G system. The 5G mobile communication system can include non-standalone (NSA) and/or standalone (SA).

The technical solutions according to the embodiments of the present disclosure may also be applied to a machine-type communication (MTC), an LTE-Machine (LTE-M), a device-to-device (D2D) network, a machine-to-machine (M2M) network, an IoT network, or other networks. The IoT network may include, for example, an Internet of vehicles (IoV). Communication methods in an IoV system are collectively referred to as vehicle-to-X (i.e., V2X, where X represents any object), such as vehicle-to-vehicle (V2V) communications, vehicle-to-infrastructure (V2I) communications, vehicle-to-pedestrian (V2P) communications, or vehicle-to-network (V2N) communications.

### 1) DMRS

In wireless communication systems (such as Wi-Fi, 4G (LTE), 5G (NR), future 6G, etc.), the basic workflow may include the following steps.

At the transmitting end, the bit stream information to be transmitted undergoes channel coding (possibly along with corresponding rate matching) to obtain encoded bits, which are then modulated to produce modulation symbols (for example, the modulation may employ one or more of binary phase shift keying (BPSK), quadrature phase shift keying (QPSK), 16 quadrature amplitude modulation (16QAM), 64QAM, 256QAM, 512QAM, 1024QAM, 2048QAM, or 4096QAM). Next, the modulation symbols and a DMRS are mapped into corresponding time-frequency resources (for example, into corresponding resource elements (REs)). After subsequent processing, orthogonal frequency-division multiplexing (OFDM) symbols, single-carrier frequency-division multiple access (SC-FDMA) symbols, or other forms of multi-carrier symbols are obtained.

At the receiving end, the receiver estimates the channel by measuring the DMRS, demodulates the modulation symbols, and then performs channel decoding to obtain the transmitted bits. These steps may be combined for iteration (for example, the information obtained by the decoding module may be used in modules involving channel estimation and/or modulation symbol demodulation), and they do not necessarily have to follow the strict sequential order mentioned above.

The aforementioned process is applicable to downlink (DL) transmission (i.e., network-to-terminal transmission), uplink (UL) transmission (i.e., terminal-to-network transmission), and sidelink (SL) transmission (i.e., terminal-to-terminal transmission). To obtain the bit information transmitted by the transmitting end, the receiving end needs to use the DMRS. Here, the transmission may be either data transmission or control information transmission. For example, the transmission may be over channels such as a physical downlink shared channel (PDSCH), a physical uplink shared channel (PUSCH), a physical sidelink shared channel (PSSCH), a physical downlink control channel (PDCCH), a physical uplink control channel (PUCCH), a physical sidelink control channel (PSCCH), and a physical sidelink feedback channel (PSFCH). In the subsequent schemes of the present disclosure, for simplicity of description, the data transmission is used in some places for illustration. Here, the data may include general data to be transmitted (such as the data transmitted over the PDSCH) or the control information.

Due to the complexity and time-varying characteristics of the wireless channel environment, in the aforementioned systems, the receiver's estimation and recovery of the wireless channel directly affect the ultimate data recovery performance. In traditional communication systems, generally speaking, a DMRS of a control channel (i.e., a channel for control information transmission) is relatively fixed, meaning its density and/or pattern do not need to change dynamically. In this case, the design of the DMRS tends to be conservative, aiming to adapt to various wireless channel environments. For a data channel (i.e., a channel for data transmission), in order to reduce DMRS overhead, different DMRS densities and/or patterns are typically designed, and the system configures or instructs the receiver to use which DMRS based on the current wireless channel environment.

A brief introduction is provided hereinafter by taking the data DMRS in the 5G (NR) system as an example.

In the NR system, a DMRS may be divided into a front-loaded DMRS (also known as a front-loaded DL DMRS) and a post-loaded DMRS (also known as an additional RS: for example, for high-speed UEs, to improve channel estimation performance, some additional RSs are added on top of the front-loaded DMRS, such as transmitting additional reference signals (i.e., DMRSs) at a certain position in the rear of the allocated time-domain resources). The front-loaded DMRS is usually located in the first few OFDM symbols of a slot, and a pattern of the post-loaded DMRS is a repetition of the front-loaded DMRS (for example, using the same frequency-domain resources, or using the same number of OFDM symbols), to ensure performance in high-speed scenarios. The front-loaded DMRS may include 1 or 2 OFDM symbols, configured by the network device. At the same time, NR supports two different types of DMRS: Type 1 and Type 2, with different resource occupancy modes for different types. In the figure below, one small grid represents one RE, 12 sub-carriers in the frequency domain constitute one resource block (RB), and the time domain is exemplified by 7 symbols.

Referring to FIG. 2, it is the schematic diagram of structure types of a DMRS involved in the present disclosure. As shown in FIG. 2, for Type 1 DMRS (as shown on the left side of FIG. 2), two code-division multiplexing (CDM) groups can be supported on one OFDM symbol of each physical resource block (PRB), with each CDM group including six sub-carriers. Each CDM group can support two ports, which are kept orthogonal through orthogonal cover codes (OCCs). Specifically, the OCC used by one port on different carriers is [+1 +1 +1 +1 +1 +1], while the OCC used by the other port is [+1 -1 +1 -1 +1 -1]. In this way, Type 1 DMRS can support up to four orthogonal ports on one OFDM symbol and up to eight orthogonal ports on two OFDM symbols (with time-domain OCC (TD-OCC) used between the two OFDM symbols). Specifically, the first CDM group of the first DMRS symbol includes ports {1000, 1001}, and the second CDM group of the first DMRS symbol includes ports {1002, 1003}; the first CDM group of the second DMRS symbol includes ports {1004, 1005}, and the second CDM group of the second DMRS symbol includes ports {1006, 1007}.

For Type 2 DMRS (as shown on the right side of FIG. 2), three CDM groups can be supported on one OFDM symbol of each PRB, with each CDM group including 4 sub-carriers that are adjacent in pairs. Each CDM group can support two ports, which are kept orthogonal through OCCs. Specifically, one port uses an OCC of [+1 +1 +1 +1] on different carriers, while the other port uses an OCC of [+1 -1 +1 -1]. In this way, Type 2 DMRS can support up to six orthogonal ports on one OFDM symbol and up to twelve orthogonal ports on two OFDM symbols (with TD-OCC used between the two OFDM symbols). Specifically, the first CDM group of the first DMRS symbol includes ports {1000, 1001}, the second CDM group of the first DMRS symbol includes ports {1002, 1003}, and the third CDM group of the first DMRS symbol includes ports {1004, 1005}; the first CDM group of the second DMRS symbol includes ports {1006, 1007}, the second CDM group of the second DMRS symbol includes ports {1008, 1009}, and the third CDM group of the second DMRS symbol includes ports {1010, 1011}.

The RE and RB in FIG. 2 are explained as follows.

The RE, i.e., the resource element, is the smallest time-frequency resource unit in the system. For example, in NR or LTE systems, one RE corresponds to one sub-carrier in the frequency domain and one symbol in the time domain.

The RB, i.e., the resource block, may refer to K consecutive sub-carriers in the frequency domain. Additionally, in some systems, RB may refer to K consecutive sub-carriers in the frequency domain and M consecutive symbols in the time domain. For example, K typically takes the value of 12, but it may also take other values, such as 2 raised to the power of n, meaning K may be 8, 16, or other values. M typically takes one or more of the values 6, 7, 13, or 14. In subsequent descriptions, the RB and the physical RB (PRB) may not be distinguished, and they are collectively referred to as the PRB.

The symbol mentioned in the previous sections regarding resources may correspond to one or more of the following symbols.
- An OFDM symbol.
- An SC-FDMA symbol (also known as a discrete Fourier transform-spread-OFDM (DFT-s-OFDM) symbol, or a multi-carrier symbol utilizing a transform precoder, or an OFDM symbol employing a transform precoder).
- A multi-carrier symbol in other forms (i.e., a symbol formed by multiple sub-carriers).

In communication systems utilizing related technologies, the DMRS and the data occupy different REs (i.e., there is no overlap in RE time-frequency resources). This means that either DMRS or data may be mapped to a single RE position, but not both simultaneously. Consequently, the data and the DMRS are orthogonal in time-frequency resources (i.e., there is no overlap), and this type of DMRS is referred to as an orthogonal DMRS. When the terminal (e.g., UE) moves at a high speed, to enhance channel estimation performance, the DMRS typically needs to occupy more symbols in the time domain, meaning it needs to occupy more RE resources. In this case, the RE resources available for the data may decrease.

### 2) 5G PUCCH DMRS

In the 5G system, the PUCCH has different formats, such as PUCCH format 0, PUCCH format 1, PUCCH format 2, PUCCH format 3, and PUCCH format 4. For PUCCH format 0, it transmits related uplink control information through sequences, thus it does not require an additional DMRS. For the other PUCCH formats (such as formats 1, 2, 3, and 4), an additional DMRS is required, and the REs for transmitting the uplink control information are different from the REs for transmitting the DMRS, that is, these PUCCH formats also use an orthogonal DMRS (to simplify the description, this type of DMRS where the REs for the DMRS do not overlap with the REs for the data (including the control information) is referred to as an orthogonal DMRS).

On the one hand, in communication systems based on related technologies, a pilot signal and uplink control information occupy different time-frequency resources, meaning that the pilot signal and the uplink control information are orthogonally placed in time-frequency resources. When total time-frequency transmission resources are fixed, increased resource overhead required for the pilot signal means that resources available for transmitting the uplink control information decrease, reducing the reliability for transmission of the uplink control information.

One way to address the aforementioned issue is to enable the DMRS and the uplink control information to be transmitted on the same RE. In this case, advanced receivers (such as iterative receivers, artificial intelligence (AI)/machine learning (ML) receivers) may be utilized to process and demodulate the uplink control information. For the AI/ML receivers, various methods may be employed, such as deep learning algorithms. Specifically, a fully connected network (FCN), convolutional neural network (CNN), recurrent neural network (RNN), or transformer neural network architecture may be adopted, either individually or in combination. The above receivers are merely examples, and actual receivers are not necessarily limited to the examples provided.

The premise of adopting the aforementioned advanced receiver is that the receiving end must be aware of a corresponding reference signal configuration. Otherwise, it may lead to a mismatch between the receiver and an actual received signal, resulting in performance degradation.

On the other hand, a DMRS for a PUCCH is generally pre-defined, which results in limited flexibility. For some specific terminals, the aforementioned DMRS scheme may not be optimal. For instance, certain terminals, depending on their actual wireless environments, may require a DMRS with higher or lower density to achieve good performance.

It should be noted that in a CDMA system, although pilot signals (including a DMRS) and data signals (including data signals related to control information) can be transmitted on the same time-frequency resources, both the pilot signals and the data signals require additional spreading processing. For example, the pilot signals and the data signals need to use different orthogonal codes for distinction. In other words, in the CDMA system based on related technologies, the pilot signals and the data signals transmitted on the same time-frequency resources are the pilot signals and the data signals that had undergone spreading processing. However, the embodiments of the present disclosure are mainly applied to OFDM systems/SC-FDMA systems, as well as other systems based on a plurality of sub-carriers. The modulation symbols (such as QPSK and 16QAM) of the data signals and the modulation symbols for demodulating the pilot signals can be directly transmitted on the same time-frequency resources, without additional spreading processing for the pilot signals and the data signals. That is, in the solutions according to subsequent embodiments of the present disclosure, the pilot signals and the data signals transmitted on the same time-frequency resources can be the pilot signals and the data signals without spreading processing.

The solution according to the subsequent embodiments of the present disclosure presents a scheme for configuring and implementing transmission of a DMRS in a control channel (including the aforementioned PUCCH and PSFCH).

Referring to FIG. 3, it is a flowchart of a method for control channel transmission according to an embodiment of the present disclosure. This method may be performed by a first device, wherein the first device may be the terminal device 120 or the terminal device 130 in the network architecture shown in FIG. 1. The method may include the following steps.

In step 310, the first device receives indication information, wherein the indication information is used to indicate a first DMRS pattern or a first control channel type, wherein the first control channel type corresponds to the first DMRS pattern, and the first DMRS pattern is one of a plurality of DMRS patterns.

The indication information may be transmitted from a second device to the first device.

In some embodiments, the first device may be a terminal device, and the second device may be a network device communicating with the terminal device, such as an access network device like a base station.

In some embodiments, the first device may be a terminal device, and the second device may be another terminal device that performs sidelink communication with the terminal device.

In the embodiments of the present disclosure, a plurality of DMRS patterns may be preset for a control channel, or a plurality of control channel types may be preset for the control channel, with each control channel type corresponding to a specific DMRS pattern. The second device may indicate, via the indication information, the first DMRS pattern or the first control channel type corresponding to the first DMRS pattern to the first device, thereby enabling the first device to determine a DMRS pattern (i.e., the first DMRS pattern) for control channel transmission based on the indication information.

That is, in the solution according to the embodiments of the present disclosure, the second device may indicate one DMRS pattern from the plurality of DMRS patterns to the first device via the indication information.

In some embodiments, the DMRS pattern may be used to define one or more of: a density of time-frequency resources in the time/frequency domain, a position of time-frequency resources in the time/frequency domain, a generation parameter of a DMRS sequence, a generation method of a DMRS sequence, or a power parameter.

In step 320, the first device transmits a control channel according to a DMRS pattern indicated by the indication information.

The first device may transmit the control channel to the second device according to the DMRS pattern indicated by the indication information (i.e., the first DMRS pattern). In other words, the first device carries a DMRS and data in the control channel according to the first DMRS pattern and transmits the control channel to the second device. In other words, the DMRS and the data in the control channel are carried according to the DMRS pattern.

In summary, according to the solution in the embodiments of the present disclosure, the first device may receive indication information that is used to indicate the first DMRS pattern in a plurality of DMRS patterns, or the first control channel type corresponding to the first DMRS pattern. When subsequently transmitting a control channel, the first device transmits the control channel according to the DMRS pattern indicated by the indication information, which ensures the flexibility of the DMRS transmission in the control channel.

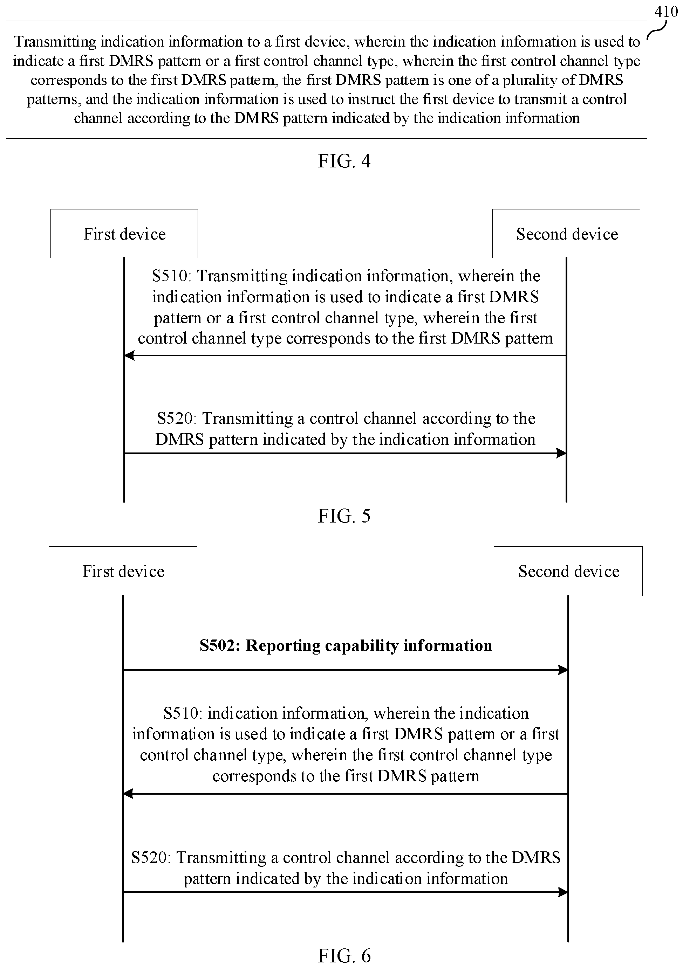

Referring to FIG. 4, it is a flowchart of a method for control channel transmission according to an embodiment of the present disclosure. This method may be performed by a second device, wherein the second device may be the terminal device 120 or the terminal device 130 in the network architecture shown in FIG. 1, or the second device may be the network device 110 in the network architecture shown in FIG. 1. This method may include the following steps.

In step 410, the second device transmits indication information to a first device, wherein the indication information is used to indicate a first DMRS pattern or a first control channel type, wherein the first control channel type corresponds to the first DMRS pattern, the first DMRS pattern is one of a plurality of DMRS patterns, and the indication information is used to instruct the first device to transmit a control channel according to a DMRS pattern indicated by the indication information.

In summary, according to the solution in the embodiments of the present disclosure, the second device may transmit indication information to the first device, wherein the indication information is used to indicate the first DMRS pattern in a plurality of DMRS patterns, or the first control channel type corresponding to the first DMRS pattern. This allows the first device, when subsequently transmitting a control channel, to transmit the control channel according to the DMRS pattern indicated by the indication information, which ensures the flexibility of the DMRS transmission in the control channel.

Referring to FIG. 5, it is a flowchart of a method for control channel transmission according to an embodiment of the present disclosure. This method may be performed by interaction between a first device and a second device. The first device may be the terminal device 120 or the terminal device 130 in the network architecture shown in FIG. 1, and the second device may be the network device 110 in the network architecture shown in FIG. 1. Alternatively, the first device and the second device may be the terminal device 120 and the terminal device 130, respectively, in the network architecture shown in FIG. 1. This method may include the following steps.

In step 510, the second device transmits indication information to the first device. The indication information is used to indicate a first DMRS pattern or a first control channel type. The first control channel type corresponds to the first DMRS pattern. The first DMRS pattern is one of a plurality of DMRS patterns.

In the embodiments of the present disclosure, the plurality of DMRS patterns may refer to different DMRS patterns on the same control channel (such as a PUCCH and a PSFCH) resources (including resources used for uplink control information and DMRS transmission); or alternatively, the plurality of DMRS patterns may refer to a plurality of DMRS patterns that can be used/allowed to be used on a single control channel resource (such as a PUCCH resource).

In some embodiments, the indication information is carried in one or a combination of more of the following messages/signaling:
A broadcast message; a system message; radio resource control (RRC) signaling; a medium access control (MAC) control element (CE); downlink control information (DCI) signaling; a downlink message in a random access procedure; or AI/ML dedicated signaling.

That is, the second device may carry the indication information in one or more of: the broadcast message (such as a master indication block (MIB)), the system message (such as a system information block (SIB)), the RRC signaling, the MAC CE, the DCI signaling, the random access message, or the AI/ML dedicated signaling.

In some embodiments, the indication information is used to indicate, for a control channel format and/or a control channel resource, the first DMRS pattern or the first control channel type corresponding to the control channel.

Transmitting the control channel according to the DMRS pattern indicated by the indication information includes:
transmitting the control channel in accordance with the control channel format and/or the control channel resource based on the DMRS pattern indicated by the indication information.

In the embodiments of the present disclosure, the control channel transmitted by the first device may have a plurality of control channel types, and a DMRS pattern corresponding to each control channel type may be indicated by a piece of indication information. That is, different pieces of indication information may indicate different DMRS patterns for different control channel types. In addition, the indication information may also indicate a corresponding DMRS pattern or control channel type for a certain control channel format.

Optionally, there may be a plurality of pieces of indication information, wherein each piece of indication information indicates a different DMRS pattern or control channel type for a specific object (e.g., a control channel format such as a PUCCH format, or a resource such as a PUCCH resource).

Correspondingly, the transmission of the control channel by the first device according to the DMRS pattern indicated by the indication information may mean that the first device transmits the control channel corresponding to a first control channel format according to the DMRS pattern indicated by the indication information.

In some embodiments, each of the plurality of DMRS patterns is an orthogonal DMRS pattern;
alternatively, at least one of the plurality of DMRS patterns is a non-orthogonal DMRS patterns.

The orthogonal DMRS pattern refers to a pattern where a DMRS and data occupy different REs, or in other words, the REs occupied by the DMRS and the data do not overlap. In the embodiments of the present disclosure, each of the plurality of DMRS patterns is an orthogonal DMRS pattern, meaning that in any of these DMRS patterns, the REs occupied by the DMRS and the data do not overlap.

Correspondingly, the non-orthogonal DMRS pattern refers to a pattern where the REs occupied by the DMRS and the data are completely or partially the same, or in other words, the REs occupied by the DMRS and the data are allowed to overlap. In the embodiments of the present disclosure, at least one of the plurality of DMRS patterns is a non-orthogonal DMRS pattern, which means that among the plurality of DMRS patterns, some or all of these DMRS patterns allow the overlap of the REs occupied by the DMRS and the data.

In some embodiments, each of the plurality of DMRS patterns has one or more of the following parameters:
A frequency-domain density of a time-frequency resource used by a DMRS; a time-domain density of a time-frequency resource used by a DMRS; a frequency-domain resource position of a time-frequency resource used by a DMRS; a time-domain resource position of a time-frequency resource used by a DMRS; a DMRS sequence generation parameter; a DMRS sequence generation method; or a power parameter.

That is, each of the aforementioned DMRS patterns may be used to indicate one or more of the following parameters in the control channel: the frequency-domain density of the time-frequency resource used by the DMRS, the time-domain density of the time-frequency resource used by the DMRS, the frequency-domain resource position of the time-frequency resource used by the DMRS, the time-domain resource position of the time-frequency resource used by the DMRS, the generation parameter, the generation method, the power parameter, or the like.

In some embodiments, values of all or part of the parameters differ between any two of the plurality of DMRS patterns. That is, one or more of the following parameters of the plurality of DMRS patterns are different:
a density of the time-frequency resource used by the DMRS in the time domain; a density of the time-frequency resource used by the DMRS in the frequency domain; a position of the time-frequency resource used by the DMRS in the frequency domain; a position of the time-frequency resource used by the DMRS in the time domain; a DMRS sequence generation parameter; a DMRS sequence generation method; or a power parameter.

In some embodiments, the density of the time-frequency resource used by the DMRS in the time domain may refer to the density/number of symbols occupied by the time-frequency resource used by the DMRS. For instance, the number of occupied symbols may be the number of symbols occupied within a sub-frame or a slot.

In some embodiments, the density of the time-frequency resource used by the DMRS in the frequency domain may refer to the density/number of sub-carriers occupied by the time-frequency resource used by the DMRS. For example, the number of occupied sub-carriers may be the number of sub-carriers occupied within an RB.

In some embodiments, the position of the time-frequency resource used by the DMRS in the frequency domain may refer to one or more sub-carriers where the time-frequency resource used by the DMRS is located.

In some embodiments, the position of the time-frequency resource used by the DMRS in the time domain may refer to one or more symbols where the time-frequency resource used by the DMRS is located.

In some embodiments, in a case where at least one of the plurality of DMRS patterns is the non-orthogonal DMRS pattern and where the non-orthogonal DMRS pattern has a power-related parameter, the power parameter of the non-orthogonal DMRS pattern is used to indicate one or more of the following parameters of a shared RE:
a ratio of transmit power of a DMRS on the shared RE to total transmit power on shared RE;
a ratio of transmit power of data on the shared RE to total transmit power on the shared RE;
a ratio of transmit power of a DMRS on the shared RE to transmit power of data on the shared RE;
a ratio of transmit power of data on the shared RE to transmit power of a DMRS on the shared RE; or
a ratio of transmit power of DMRS on an RE to total transmit power on the RE.

The power parameter of the DMRS pattern may refer to one or more related parameters of the power of the DMRS transmitted on the control channel in this DMRS pattern. For example, this power parameter may be a value of the transmit power of the DMRS, or the ratio between the transmit power of the DMRS and the total transmit power or between the transmit power of the DMRS and the transmit power of other data.

For the non-orthogonal DMRS pattern, since it allows the DMRS and the data to be carried via the same RE (also known as shared RE), the power parameter of the non-orthogonal DMRS pattern may include the ratio of the transmit power of the DMRS/data on the shared RE to the total transmit power of the shared RE; the power parameter of the non-orthogonal DMRS pattern may also include the ratio or reciprocal of the ratio between the transmit powers of the DMRS and the data on the shared RE; the power parameter of the non-orthogonal DMRS pattern may also include the ratio of the transmit power of the DMRS on any RE to the total transmit power of that RE.

In some embodiments, the indication information is further used to indicate a frequency-domain resource density and/or frequency-domain resource position of the DMRS in the first DMRS pattern;
alternatively, the frequency-domain resource density and/or frequency-domain resource position of the DMRS in the first DMRS pattern is pre-defined.

Among them, the frequency-domain resource densities and/or frequency-domain resource positions of the DMRS in the plurality of DMRS patterns may be indicated by indication information. That is, the frequency-domain resource density and/or frequency-domain resource position of the DMRS in each of the plurality of DMRS patterns may be flexibly indicated by the second device, ensuring the flexibility of the frequency-domain resource density and/or frequency-domain resource position of the DMRS.

Alternatively, the frequency-domain resource densities and/or frequency-domain resource positions of the DMRS in the plurality of DMRS patterns may also be specified in advance by protocol or preset at the factory. That is, the frequency-domain resource density and/or frequency-domain resource position of the DMRS in each of the plurality of DMRS patterns do not require indication by the second device, thereby saving signaling resources.

Alternatively, the frequency-domain resource densities and/or frequency-domain resource positions of the DMRS in some of the plurality of DMRS patterns may be indicated by indication information, while the frequency-domain resource densities and/or frequency-domain resource positions of the DMRS in other DMRS patterns may be specified in advance by protocol or preset at the factory.

For example, among the plurality of DMRS patterns, the frequency-domain resource density and/or frequency-domain resource position of the DMRS in a specified DMRS pattern may be indicated by indication information, while the frequency-domain resource densities and/or frequency-domain resource positions of the DMRS in other DMRS patterns may be specified in advance by protocol or preset at the factory. For instance, the plurality of DMRS patterns include four DMRS patterns, which are labeled 0 to 3 for ease of description. Among them, the frequency-domain resource densities and/or frequency-domain resource positions of the DMRS in DMRS patterns numbered 0 and 1 may be indicated by indication information, while the frequency-domain resource densities and/or frequency-domain resource positions of the DMRS in DMRS patterns numbered 2 and 3 may be specified in advance by protocol or preset at the factory. That is, when the first DMRS pattern indicated by the aforementioned indication information is the DMRS pattern numbered 0 or 1, the indication information also indicates the frequency-domain resource density and/or frequency-domain resource position of the DMRS in the first DMRS pattern; conversely, when the first DMRS pattern indicated by the aforementioned indication information is the DMRS pattern numbered 2 or 3, the indication information may not indicate the frequency-domain resource density and/or frequency-domain resource position of the DMRS in the first DMRS pattern, and the first device may determine the frequency-domain resource density and/or frequency-domain resource position of the DMRS in the first DMRS pattern via protocol specifications or factory settings.

For another example, among the plurality of DMRS patterns, the frequency-domain resource density and/or frequency-domain resource position of the DMRS in the orthogonal DMRS pattern may be indicated by indication information, while the frequency-domain resource density and/or frequency-domain resource position of the DMRS in the non-orthogonal DMRS pattern may be specified in advance by protocol or preset at the factory. For example, when the first DMRS pattern indicated by the aforementioned indication information is the orthogonal DMRS pattern, the indication information also indicates the frequency-domain resource density and/or frequency-domain resource position of the DMRS in the first DMRS pattern; conversely, when the first DMRS pattern indicated by the aforementioned indication information is the non-orthogonal DMRS pattern, the indication information may not indicate the frequency-domain resource density and/or frequency-domain resource position of the DMRS in the first DMRS pattern, and the first device may determine the frequency-domain resource density and/or frequency-domain resource position of the DMRS in the first DMRS pattern via protocol specifications or factory settings.

For yet another example, among the plurality of DMRS patterns, the frequency-domain resource density and/or frequency-domain resource position of the DMRS in the non-orthogonal DMRS pattern may be indicated by indication information, while the frequency-domain resource density and/or frequency-domain resource position of the DMRS in the orthogonal DMRS pattern may be specified in advance by protocol or preset at the factory. For example, when the first DMRS pattern indicated by the aforementioned indication information is the non-orthogonal DMRS pattern, the indication information also indicates the frequency-domain resource density and/or frequency-domain resource position of the DMRS in the first DMRS pattern; conversely, when the first DMRS pattern indicated by the aforementioned indication information is the orthogonal DMRS pattern, the indication information may not indicate the frequency-domain resource density and/or frequency-domain resource position of the DMRS in the first DMRS pattern, and the first device may determine the frequency-domain resource density and/or frequency-domain resource position of the DMRS in the first DMRS pattern via protocol specifications or factory settings.

In some embodiments, the indication information is also used to indicate a time-domain resource density and/or time-domain resource position of the DMRS in the first DMRS pattern;
alternatively, the time-domain resource density and/or time-domain resource position of the DMRS in the first DMRS pattern is pre-defined.

The time-domain resource densities and/or time-domain resource positions of the DMRS in the plurality of DMRS patterns may be indicated by indication information. That is, the time-domain resource density and/or time-domain resource position of the DMRS in each of the plurality of DMRS patterns may be flexibly indicated by the second device, ensuring the flexibility of the time-domain resource density and/or time-domain resource position of the DMRS.

Alternatively, the time-domain resource densities and/or time-domain resource positions of the DMRS in the plurality of DMRS patterns may also be specified in advance by protocol or preset at the factory. That is, the time-domain resource density and/or time-domain resource position of the DMRS in each of the plurality of DMRS patterns do not require indication by the second device, thereby saving signaling resources.

Alternatively, the time-domain resource densities and/or time-domain resource positions of the DMRS in some of the plurality of DMRS patterns may be indicated by indication information, while the time-domain resource densities and/or time-domain resource positions of the DMRS in other DMRS patterns may be specified in advance by protocol or preset at the factory.

For example, among the plurality of DMRS patterns, the time-domain resource density and/or time-domain resource position of the DMRS in a specified DMRS pattern may be indicated by indication information, while the time-domain resource densities and/or time-domain resource positions of the DMRS in other DMRS patterns may be specified in advance by protocol or preset at the factory. For instance, the plurality of DMRS patterns include four DMRS patterns, which are labeled 0 to 3 for ease of description. Among them, the time-domain resource densities and/or time-domain resource positions of the DMRS in DMRS patterns numbered 0 and 1 may be indicated by indication information, while the time-domain resource densities and/or time-domain resource positions of the DMRS in DMRS patterns numbered 2 and 3 may be specified in advance by protocol or preset at the factory. That is, when the first DMRS pattern indicated by the aforementioned indication information is a DMRS pattern numbered 0 or 1, the indication information also indicates the time-domain resource density and/or time-domain resource position of the DMRS in the first DMRS pattern; conversely, when the first DMRS pattern indicated by the aforementioned indication information is a DMRS pattern numbered 2 or 3, the indication information may not indicate the time-domain resource density and/or time-domain resource position of the DMRS in the first DMRS pattern, and the first device may determine the time-domain resource density and/or time-domain resource position of the DMRS in the first DMRS pattern via protocol specifications or factory settings.

For other example, among the plurality of DMRS patterns, the time-domain resource density and/or time-domain resource position of the DMRS in the orthogonal DMRS pattern may be indicated by indication information, while the time-domain resource density and/or time-domain resource position of the DMRS in the non-orthogonal DMRS pattern may be specified in advance by protocol or preset at the factory. For example, when the first DMRS pattern indicated by the indication information is the orthogonal DMRS pattern, the indication information also indicates the time-domain resource density and/or time-domain resource position of the DMRS in the first DMRS pattern; conversely, when the first DMRS pattern indicated by the indication information is the non-orthogonal DMRS pattern, the indication information may not indicate the time-domain resource density and/or time-domain resource position of the DMRS in the first DMRS pattern, and the first device may determine the time-domain resource density and/or time-domain resource position of the DMRS in the first DMRS pattern via protocol specifications or factory settings.

For yet another example, among the plurality of DMRS patterns, the time-domain resource density and/or time-domain resource position of the DMRS in the non-orthogonal DMRS pattern may be indicated by indication information, while the time-domain resource density and/or time-domain resource position of the DMRS in the orthogonal DMRS pattern may be specified in advance by protocol or preset at the factory. For example, when the first DMRS pattern indicated by the aforementioned indication information is the non-orthogonal DMRS pattern, the indication information also indicates the time-domain resource density and/or time-domain resource position of the DMRS in the first DMRS pattern; conversely, when the first DMRS pattern indicated by the aforementioned indication information is the orthogonal DMRS pattern, the indication information may not indicate the time-domain resource density and/or time-domain resource position of the DMRS in the first DMRS pattern, and the first device may determine the time-domain resource density and/or time-domain resource position of the DMRS in the first DMRS pattern via protocol specifications or factory settings.

In some embodiments, the indication information is also used to indicate the sequence generation parameter of the first DMRS pattern.

In the embodiments of the present disclosure, the sequence generation parameters of DMRS in the plurality of DMRS patterns may be indicated to the first device by the second device. That is, the second device may dynamically adjust the sequence generation parameter of the DMRS, thereby enhancing the flexibility of the setting of DMRS sequence generation parameters.

In some embodiments, the sequence generation parameter includes one or more of the following:
A slot number of a slot where a DMRS is located; a symbol index of a symbol where a DMRS is located, or an internal index of a symbol where the DMRS is located within a slot; a system frame number (SFN) of a system frame where a DMRS is located; a cell identity of a cell where a DMRS is located, or a physical cell identity (PCI) of a cell where a DMRS is located; a carrier index of a carrier where a DMRS is located; a port number of a DMRS; an index corresponding to a data scheduling control channel, wherein feedback information of data scheduled by the data scheduling control channel is carried by the aforementioned control channel (for example, if DCI in a PDCCH schedules a PDSCH, an acknowledgment (ACK)/negative acknowledgment (NACK) corresponding to this PDSCH is fed back via a PUCCH (i.e., the aforementioned control channel); in this scenario, the data scheduling control channel refers to the PDCCH, the data scheduled by the data scheduling control channel is the PDSCH, and the feedback information of the data scheduled by the data scheduling control channel is the ACK/NACK); a DMRS scrambling parameter; or other related parameters configured by a network.

The sequence generation parameter indicated by the aforementioned indication information may include one or more of: a slot number of a slot where the DMRS is located, a symbol index of a symbol where the DMRS is located, a SFN of a system frame where the DMRS is located, a cell identity of a cell where the DMRS is located, a carrier index of a carrier where the DMRS is located, a number of a port where the DMRS is located, or an index of a control channel where the DMRS is located, or parameters configured by a network, thereby providing a flexible configuration method for sequence generation parameters. In some embodiments, the indication information may indicate one or more of the above parameters.

In some embodiments, the indication information is configured for a cell; or
the indication information is configured for a carrier; or
the indication information is configured for a bandwidth part (BWP); or
the indication information is configured for a PSFCH; or
the indication information is configured for a PUCCH resource; or
the indication information is configured for a PUCCH resource group; or
the indication information is configured for a PUCCH format.

Furthermore, the indication information may be information within configuration information of a cell; or
the indication information may be information within configuration information of a carrier; or
the indication information may be information within configuration information of a BWP; or
the indication information may be information within configuration information of a PSFCH; or
the indication information may be information within configuration information of a PUCCH resource; or
the indication information may be information within configuration information of a PUCCH resource group; or
the indication information may be information within configuration information of a PUCCH format.

In the embodiments of the present disclosure, DMRS patterns corresponding to different carriers, BWPs, PSFCHs, PUCCHs, PUCCH resource groups, or PUCCH formats may be configured by different indication information, thereby providing a plurality of indication granularities for DMRS patterns and ensuring flexibility in DMRS pattern indication.

In some embodiments, the DMRS pattern indicated by the indication information is not used for PUCCH format 0;
alternatively, the DMRS pattern indicated by the indication information is not used for PUCCH transmission that only feeds back an ACK/NACK.

In some embodiments, for a control channel with repeated transmissions, one or more of the following parameters of a DMRS corresponding to each transmission are the same:
whether the DMRS and control information use at least one same RE; whether all REs corresponding to the DMRS simultaneously used for control information; a frequency-domain density of a time-frequency resource used by the DMRS; a time-domain density of a time-frequency resource used by the DMRS; or a power parameter.

In the embodiments of the present disclosure, for the control channel with repeated transmissions, there may be differences in various aspects such as whether the DMRS and the control information use at least one same RE, whether all REs corresponding to the DMRS are simultaneously used for the control information, the frequency-domain density of the time-frequency resource used by the DMRS, the time-domain density of the time-frequency resource used by the DMRS, and the power parameter. This ensures flexibility in the configuration of the DMRS during the repeated transmissions of the control channel.

In some embodiments, configuration information of the plurality of DMRS patterns is the same as DMRS configuration information of a data channel in terms of one or more of the following parameters: a power parameter; a DMRS sequence generation method; a frequency-domain density of a time-frequency resource used by a DMRS; or a time-domain density of a time-frequency resource used by a DMRS.

In the embodiments of the present disclosure, the configuration information of the DMRS of the control channel may share one or more of the following parameters with the DMRS configuration information of the data channel: the power parameter, DMRS sequence generation method, frequency-domain density of the time-frequency resource used by the DMRS, or time-domain density of the time-frequency resource used by the DMRS. This allows some configurations of the DMRS in the control channel and the data channel to be unified, saving system resources and improving the efficiency of DMRS configuration and transmission.

In step 520, the first device performs control channel transmission with the second device according to the DMRS pattern indicated by the indication information.

For example, the first device transmits a control channel to the second device according to the first DMRS pattern indicated by the indication information.

When the first device is a terminal device and the second device is a network device, the terminal device may transmit a PUCCH to the network device according to the first DMRS pattern indicated by the indication information. That is, the DMRS and data in the PUCCH are generated and transmitted according to the first DMRS pattern.

Alternatively, when the first device and second device are two terminal devices in sidelink communication, the first device may transmit a PSFCH to the second device according to the first DMRS pattern indicated by the indication information. That is, the DMRS and data in the PSFCH are generated and transmitted according to the first DMRS pattern.

Based on the embodiment shown in FIG. 5, reference is made to FIG. 6, which is a flowchart of a method for control channel transmission according to an embodiment of the present disclosure. Before step 510 in the embodiment shown in FIG. 5 as described above, step 502 may also be included.

In step 502, the first device reports capability information to the second device; correspondingly, the second device receives the capability information reported by the first device.

Optionally, in step 510, the second device may transmit the indication information to the first device based on the capability information reported by the first device.

The capability information is used to indicate one or more of: support of the first device for receiving the indication information; a plurality of DMRS patterns supported by the first device; a plurality of control channel types supported by the first device; support of the first device for a non-orthogonal DMRS pattern; or support of the first device for the first DMRS pattern or the first control channel type.

In the embodiments of the present disclosure, the first device may report its capabilities to the second device in advance, such as whether it supports the aforementioned indication information, whether it supports a plurality of DMRS patterns, whether it supports a plurality of control channel types, whether it supports a non-orthogonal DMRS pattern, whether it supports the first DMRS pattern, or whether it supports the first control channel type, etc. This enables the second device to determine whether to instruct, via the indication information, the first device to transmit the control channel using the first DMRS pattern, thereby ensuring the accuracy and compatibility of indicating the DMRS pattern in the control channel via the indication information.

In some embodiments, the capability information is reported via one or more of: RRC signaling or a MAC CE.

The first device may report the capability information via RRC signaling or a MAC CE.

Alternatively, the first device may report the capability information via RRC signaling and a MAC CE. For instance, the first device may report a portion of the capability information via RRC signaling and another portion via a MAC CE.

In some embodiments, the capability information is reported per band;
the capability information is independently reported per band combinations;
the capability information is independently reported per band per band combination;
the capability information is independently reported per component carrier (CC) per band per band combination;
the capability information is reported per frequency range (FR); or
the capability information is reported per UE.

In the embodiments of the present disclosure, for different bands, the capability information of the first device may be different (per band). In this case, the first device may report capability information for one or more bands, for example, reporting different capability information for different bands. For instance, the first device may separately report capability information for all the bands it supports; or, the first device may separately report capability information for some of the bands it supports, and may not report capability information for the remaining bands.

Alternatively, for different band combinations, the capability information of the first device may be different (per band combination). In this case, the first device may report capability information for the band combination, such as reporting different capability information for different band combinations. For example, the first device may separately report capability information for all the band combinations it supports; or, the first device may separately report capability information for some of the band combinations it supports, and may not report capability information for the remaining band combinations.

Alternatively, for each band within a band combination, the capability information of the first device may be different (per band per band combination). In this case, the first device may separately report capability information for one or more bands within the band combination, such as reporting different capability information for different bands within the band combination. For example, the first device may separately report capability information for all bands within a certain band combination; or, the first device may separately report capability information for some of the bands within a certain band combination, and may not report capability information for the remaining bands within that band combination.

Alternatively, for each carrier in each band within a band combination, the capability information of the first device may be different (per CC per band per band combination). In this case, the first device may separately report capability information for each carrier in one or more bands within the band combination, such as reporting different capability information for different carriers within a specific band of a band combination. For example, the first device may separately report capability information for each carrier in all bands in a certain band combination; or, the first device may separately report capability information for some carriers in some bands of a certain band combination, and may not report capability information for the remaining carriers in that band combination.

Alternatively, for different FRs, the capability information of the first device may be different (per FR). In this case, the first device may report capability information for one or more FRs, such as reporting different capability information for different FRs. For example, the first device may separately report capability information for all the FRs it supports; or, the first device may separately report capability information for some of the FRs it supports, and may not report capability information for the remaining FRs.

Alternatively, different UEs have different capability information (per UE), that is, each UE has its own set of capability information. In this case, the first device may report its own set of capability information to the second device.

In some embodiments, the capability information may further include one or more of: a supported power parameter; a supported frequency-domain density of a time-frequency resource used by a DMRS; or a supported time-domain density of a time-frequency resource used by a DMRS.

In the embodiments of the present disclosure, in addition to the aforementioned information about whether to support reception of the indication information, the supported multiple DMRS patterns, the supported multiple control channel types, and whether to support the first DMRS pattern or the first control channel type, the first device may also report information such as the supported power parameter, the supported frequency-domain density of the time-frequency resource used by the DMRS, and the supported time-domain density of the time-frequency resource used by the DMRS to the second device as capability information.

Based on the embodiments shown in FIGS. 5 and 6 as described above, a scheme for control channel transmission is provided for indicating one of a plurality of DMRS patterns for a single PUCCH type/format, as well as a scheme for control channel transmission provided for setting one DMRS pattern for each of a plurality of PUCCH types/formats. The two aforementioned schemes are introduced respectively hereinafter by using an example where one of two DMRS patterns is indicated.

### Embodiment 1

Taking the case where the PUCCH format remains unchanged and one of different DMRS patterns is indicated as an example, it is assumed that there are a plurality of (M) different DMRS patterns for the uplink control channel in the system. For simplicity of description, this embodiment takes M = 2 (i.e., two DMRS patterns) as an example, where the two DMRS patterns are denoted as a first DMRS pattern and a second DMRS pattern, respectively. This may be directly extended to more different DMRS patterns, and is be elaborated on individually. The first DMRS pattern and the second DMRS pattern differ, for example, in one or more of the following terms: a time-domain/frequency-domain resource density, a time-domain resource position, a frequency-domain resource position, a sequence generation parameter, a generation manner/method, a power parameter, or the like.

The different DMRS patterns here refer to different DMRS patterns on the same PUCCH resources (including the resources used for uplink control information and the DMRS transmission). For example, if the PUCCH uses N = 6 symbols, there may be M different DMRS patterns. In a single transmission, one or more of these patterns may be used. For example, the first DMRS pattern may be independently used, the second DMRS pattern may be independently used, or the first and second DMRS patterns may be simultaneously used.

A first terminal device receives first indication information transmitted by a first network device or a second terminal device (corresponding to the sidelink communication scenario). The first indication information indicates a first DMRS (denoted as a first DMRS pattern) of a control channel. This scheme can flexibly indicate or configure the DMRS of the control channel, better matching the wireless environment and improving system performance.

If the first indication information is transmitted by the first network device, the control channel corresponds to a first DMRS pattern of an uplink control channel (such as a PUCCH).

If the first indication information is transmitted by the second terminal device, the control channel corresponds to a first DMRS pattern of a sidelink feedback channel (such as a PSFCH).

For the sake of simplicity in subsequent descriptions, unless otherwise specified, "control channel" generally refers to the uplink control channel (e.g., the PUCCH) and/or the sidelink feedback channel (e.g., the PSFCH); "data signal/control information" generally refers to information transmitted on the uplink control channel (e.g., the PUCCH) and/or the sidelink feedback channel (e.g., the PSFCH).

Optionally, the first indication information may be implemented via one or a combination of more of the following messages/signaling:
a broadcast message (MIB), which may be notified to all UEs, reducing the total signaling overhead;
a system message (system information block type 1 (SIB1)), which may be notified to all UEs, reducing the total signaling overhead;
RRC signaling, which may allow individual configuration for each UE, be more targeted, and improve the performance of each UE, with higher reliability than a MAC CE and DCI;
MAC CE signaling, which may allow individual configuration for each UE, be more targeted, improve the performance of each UE, with lower latency than RRC and higher reliability than DCI;
DCI signaling, which may allow individual configuration for each UE, be more targeted and improve the performance of each UE, with lower latency than RRC and a MAC CE;
a downlink message in a random access procedure, such as MsgB, Msg2, Msg3, and Msg4, which may be pre-configured (compared to RRC) to improve performance; or
AI/ML dedicated signaling, which achieves higher transmission efficiency via dedicated signaling.

For example, the first indication information is indicated via RRC signaling and MAC CE signaling. Another example is that the first indication information is indicated via a system message and RRC signaling. Other combinations are not listed one by one and can be directly derived.

For the same signaling/message, there may also be indications from a plurality of instances of the same signaling/message. For example, the first indication information may correspond to a plurality of pieces of RRC signaling, meaning that different information elements within the first indication information are indicated via different pieces of RRC signaling.

Different instances of the first indication information may indicate different DMRS patterns. For example, in one instance, the first indication information indicates the first DMRS pattern, while in another instance, the first indication information may indicate the second DMRS pattern.

Optionally, there may be a plurality of pieces of first indication information, for example, K ≥ 2 pieces of first indication information respectively indicating DMRS patterns corresponding to K PUCCH formats.

Optionally, the first indication information may have at least one first field, and there may be different specific implementations:
Option 1: Whether it is the first DMRS pattern or the second DMRS pattern is indicated through different values. For example, when the first field takes a first value, it indicates the first DMRS pattern; when the first field takes a second value, it indicates the second DMRS pattern. Compared with Option 2/3, it has better flexibility because it can indicate more DMRS patterns, i.e., it is not limited to two DMRS patterns.
Option 2: When the first field is configured, it indicates the first DMRS pattern; when the first field is not configured, the control channel uses the second DMRS pattern (i.e., implicitly indicating the second DMRS pattern). In this case, the second DMRS pattern is a default DMRS pattern. The second DMRS pattern may be determined based on pre-defined rules (such as protocol specifications) and/or network broadcast information/system information, saving signaling overhead compared to Option 1. Optionally, when the first field is configured, its value may be "enabled" or "support", or its variations (e.g., related forms such as enable, supported, etc.).
Option 3: When the first field is configured, it indicates the second DMRS pattern; when the first field is not configured, the control channel uses the first DMRS pattern (i.e., implicitly indicating the first DMRS pattern). Compared to Option 1, it saves signaling overhead.

For instance, when the first indication information is indicated via DCI, 1 bit may be used to indicate two different DMRS patterns (when more DMRS patterns are to be indicated, more bits are required). Optionally, a "PUCCH resource indicator" field in the DCI is also used to indicate a corresponding PUCCH resource, and the PUCCH DMRS pattern indicated by the DCI is used for the PUCCH resource. A specific implementation is to pre-configure N (N ≤ M) DMRS patterns, or configure N (N ≤ M) DMRS patterns via RRC and/or a MAC CE (the aforementioned DMRS patterns are used for a PUCCH), and then the DCI respectively indicates the PUCCH resource and its corresponding DMRS pattern (one of the N DMRS patterns) via two corresponding fields. Optionally, the two fields may also be jointly encoded into one field, and the value of this field simultaneously indicates the PUCCH resource and one of the N DMRS patterns. The entire system can support M DMRS patterns, but for a certain UE, only N of these DMRS patterns may be configured for use.

Optionally, the first indication information indicates whether it is the first DMRS pattern or the second DMRS pattern by configuring different fields via a CHOICE structure.

### Embodiment 1-1-A

This embodiment is directed to an orthogonal first DMRS pattern.

Optionally, all of the REs of the first DMRS pattern are non-overlapping with those used by control information, meaning that the first DMRS pattern uses different REs from those used by the control information. Similarly, all of the REs of the second DMRS pattern are non-overlapping with those used by the control information, meaning that the second DMRS pattern uses different REs from those used by the control information. In other words, the first or second DMRS pattern is orthogonal to the control information in time-frequency resources (referred to as an orthogonal DMRS). An orthogonal DMRS pattern may be used for the first and second DMRS patterns that are specific to the same scheduled PUCCH resources (e.g., using the same number of symbols for PUCCH transmission) to avoid introducing new DMRS patterns, thereby reducing system complexity.

The time-frequency resources used by the first DMRS pattern and the second DMRS pattern differ, meaning that at least some of the time-frequency resources used by the first DMRS pattern and the second DMRS pattern are different. For instance, they may differ (or have differences) in one or more of the following aspects:
a density in the time domain of the first DMRS pattern differs from that of the second DMRS pattern;
a density in the frequency domain of the first DMRS pattern differs from that of the second DMRS pattern;
a position in the frequency domain of the first DMRS pattern differs from that of the second DMRS pattern;
a position in the time domain of the first DMRS pattern differs from that of the second DMRS pattern;
a sequence generation parameter of the first DMRS pattern differs from that of the second DMRS pattern;
a generation method of the first DMRS pattern differs from that of the second DMRS pattern;
a generation parameter of the first DMRS pattern differs from that of the second DMRS pattern; or
a power parameter of the first DMRS pattern differs from that of the second DMRS pattern.

Optionally, related configurations/parameters for the first DMRS pattern and the second DMRS pattern are pre-defined. The first indication information indicates whether the first DMRS pattern or the second DMRS pattern is used. For example, the first indication information includes one or more second fields, which indicate different DMRS patterns through different values. This scheme reduces signaling overhead by pre-defining these configurations.

Optionally, a related configuration/parameter for the first DMRS pattern is pre-defined, meaning that the first DMRS pattern is a default DMRS pattern; the first indication information indicates one or more parameters of the second DMRS pattern. For example, the first indication information includes one or more third fields, which indicate the parameters of the second DMRS pattern; if the third field is not configured, it corresponds to the first DMRS pattern (i.e., the default DMRS pattern). On the one hand, using only the default DMRS pattern can reduce signaling overhead, while on the other hand, it also provides sufficient flexibility to configure the second DMRS pattern.

The preceding text provides a more detailed explanation of the first field, while the second and third fields here are implementations of the first field. The subsequent descriptions of an x-th field (e.g., x is 5, 6, etc.) are similar.

Among them, the first DMRS pattern and the second DMRS pattern may have one or more of the following parameters:
a frequency-domain density; a time-domain density; a frequency-domain resource position; a time-domain resource position; a DMRS sequence generation parameter; or a power-related parameter.

If the first DMRS pattern and the second DMRS pattern use different numbers of symbols in the time domain (i.e., different time-domain densities), and if DCI is used to transmit the first indication information, when the speed of the first terminal device increases, the network may quickly indicate the use of more symbols for DMRS transmission, thereby better coping with the time-varying characteristics of the channel; when the speed of the first terminal device decreases, the network may quickly indicate the use of fewer symbols for DMRS transmission, thereby allocating more symbols for the transmission of control information.

### Embodiment 1-1-B

This section is directed to a non-orthogonal first DMRS. One or more or all of REs occupied by the first DMRS are simultaneously used for control information transmission (referred to as a non-orthogonal DMRS).

Optionally, REs of the second DMRS pattern are non-overlapping with those used by control information, meaning that the second DMRS pattern uses different REs from those used by the control information. In other words, the second DMRS pattern and the control information are orthogonal in time-frequency resources. One or more or all of REs of the first DMRS pattern are simultaneously used by the control information (for simplicity, these REs are referred to as shared REs). This scheme allows the DMRS and the control information to use the same REs, thereby enabling the control information to use more REs and improving transmission reliability.

Optionally, related configurations/parameters for the first DMRS pattern and the second DMRS pattern are pre-defined. The first indication information indicates whether to use the first DMRS pattern or the second DMRS pattern. For example, the first indication information includes a fifth field, which indicates different DMRS patterns through different values. Alternatively, different DMRS patterns may be indicated by whether the fifth field is configured. For instance, one implementation is that when the fifth field is not configured, the second DMRS pattern is indicated, and when the fifth field is configured, the first DMRS pattern is indicated; another implementation is the reverse, where when the fifth field is not configured, the first DMRS pattern is indicated, and when the fifth field is configured, the second DMRS pattern is indicated. This scheme can reduce signaling overhead by pre-defining these configurations.

Optionally, a related configuration/parameter of the first DMRS pattern is pre-defined, meaning that the first DMRS pattern is a default DMRS pattern; the first indication information indicates one or more parameters of the second DMRS pattern. For example, the first indication information includes one or more sixth fields, which indicate the parameters of the second DMRS pattern; if the sixth field is not configured, it corresponds to the first DMRS pattern (i.e., the default DMRS pattern). On the one hand, using only the default DMRS pattern can reduce signaling overhead, while on the other hand, it also provides sufficient flexibility to configure another DMRS pattern.

Optionally, a related configuration/parameter of the second DMRS pattern is pre-defined, meaning the second DMRS is a default DMRS; the first indication information indicates one or more parameters of the first DMRS pattern. For example, the first indication information includes one or more seventh fields, which indicate the parameters of the first DMRS pattern; if the seventh field is not configured, it corresponds to the second DMRS pattern (i.e., the default DMRS pattern). On the one hand, using only the default DMRS pattern can reduce signaling overhead, while on the other hand, it also provides sufficient flexibility to configure another DMRS.

Optionally, the first indication information indicates one or more parameters of the first DMRS pattern, or one or more parameters of the second DMRS pattern. For example, the first indication information includes one or more eighth fields, which indicate the parameters of the first DMRS pattern or the second DMRS pattern. As another example, the first indication information uses a CHOICE structure to indicate whether it is the first DMRS pattern or the second DMRS pattern by configuring different fields (when referring to the first DMRS pattern and the second DMRS pattern in this embodiment, they are both exemplified by two different DMRS patterns, which can also be directly extended to more different DMRS patterns). These two different fields in the CHOICE structure are denoted as a ninth field and a tenth field. When the ninth field is configured, it is used to indicate the first DMRS pattern, and when the tenth field is configured, it is used to indicate the second DMRS pattern. This scheme allows flexible configuration of each DMRS, providing optimization space for the system.

Among them, the second DMRS pattern may have one or more of the following parameters: a frequency-domain density; a time-domain density; a frequency-domain resource position; a time-domain resource position; a DMRS sequence generation parameter; or a power-related parameter.

Optionally, the first indication information indicates the power parameter of the first DMRS pattern, or the power parameter of the first DMRS pattern is pre-defined (e.g., pre-defined via a protocol, or pre-defined via network broadcast information, etc.). In this embodiment, wherever "power" is mentioned, it may also be directly extended to "energy". In this scheme, if the power parameter of the first DMRS pattern is indicated by the first indication information, the power allocation of the DMRS may be flexibly indicated, allowing the system to optimize the transmit power of the DMRS according to the wireless environment and improve system performance; if the power parameter of the first DMRS pattern is pre-defined, signaling overhead can be saved.

Optionally, the power parameter indicates, on a shared RE:
a ratio of transmit power of the DMRS on the shared RE to total power (i.e., total power of the DMRS and the data) on the shared RE; or
a ratio of transmit power of the data on the shared RE to total power (i.e., total power of the DMRS and the data) on the shared RE; or
a ratio of transmit power of the DMRS on the shared RE to data power on the shared RE; or
a ratio of transmit power of the data on the shared RE to DMRS power on the shared RE; or
a proportion of transmit power of the DMRS to total power on a single RE (i.e., regardless of whether this RE is shared or not).

The aforementioned ratio may be expressed either as a linear value or as a dB value. For instance, a linear value of 0.1 corresponds to a dB value of -10dB or 10dB.

Optionally, the first indication information indicates the frequency-domain resource density and/or frequency-domain resource position of the DMRS corresponding to the first DMRS pattern, or the frequency-domain resource density and/or frequency-domain resource position of the DMRS corresponding to the first DMRS pattern is pre-defined (e.g., pre-defined via a protocol, or pre-defined via network broadcast information, etc.). This scheme allows for flexible changes to the frequency-domain resource position of the first DMRS, thereby facilitating multi-user reuse and reducing DMRS interference among users.

For example, the first indication information may indicate a density of the DMRS in the frequency domain corresponding to the first DMRS pattern (e.g., indicating how many REs are occupied in one RB), and/or an offset value of the DMRS in the frequency domain corresponding to the first DMRS pattern (e.g., an RE offset value). Alternatively, the first indication information may indicate which frequency-domain resources (e.g., REs, RBs) are occupied by the DMRS corresponding to the first DMRS pattern, either through a bitmap approach or by directly indicating numbers (or indexes) of the frequency-domain resources. This scheme offers high flexibility.

For another example, as an alternative implementation, the first indication information may directly indicate which one of frequency-domain patterns the first DMRS pattern adopts. These candidate frequency-domain patterns are determined by pre-defined rules and/or network configuration. One of these frequency-domain patterns identifies which resources on the frequency domain can be used for DMRS, resulting in lower signaling overhead for this scheme.

For another example, as another implementation, a frequency-domain pattern is pre-defined. As long as the first indication information indicates the first DMRS pattern, this pre-defined frequency-domain pattern is adopted.

Optionally, the first indication information indicates the time-domain density and/or time-domain resource position of the DMRS corresponding to the first DMRS pattern. For example, the first indication information indicates the time-domain density of the DMRS corresponding to the first DMRS pattern, that is, it indicates that the DMRS is transmitted on one symbol out of every Z symbols. Another example is that the first indication information indicates which symbols (such as which symbols within a slot) the DMRS corresponding to the first DMRS pattern uses, either through a bitmap or directly indicating the symbol numbers (or indexes). This scheme can flexibly change the time-domain density and/or time-domain resource position of the DMRS, achieving a good compromise between performance and complexity.

For another example, as another implementation, the first indication information may directly indicate which one of time-domain patterns the first DMRS pattern adopts, where these candidate time-domain patterns are determined by pre-defined rules and/or network configuration. One of these time-domain patterns identifies which symbols carry the DMRS. This scheme has lower signaling overhead.

Optionally, the first indication information indicates the sequence generation parameter of the first DMRS pattern.

Optionally, generation of a sequence for the first DMRS pattern is based on one or more of the following parameters:
a slot number of a slot where the DMRS is currently located;
a symbol index of a symbol where the DMRS is currently located, or an internal index of a symbol where the first DMRS is currently located within a slot;
an SFN of a system frame where the DMRS is currently located;
a cell identity of a cell where the DMRS is currently located, or a PCI of a cell where the DMRS is currently located;
a carrier index of a carrier where the DMRS is currently located (referring herein to a carrier in carrier aggregation (CA), namely a CC, or simply a carrier);
different port numbers of the DMRS (for example, sequence generation corresponding to a first DMRS port i is based on a port number i);
an index corresponding to a control channel that schedules corresponding data (such as a group index corresponding to a CORESET); or in other words, an index corresponding to a data scheduling control channel; wherein feedback information of data scheduled by this data scheduling control channel is carried by the aforementioned control channel; for example, if DCI in a PDCCH schedules a PDSCH, an ACK/NACK corresponding to this PDSCH is fed back via a PUCCH (i.e., the aforementioned control channel); in this scenario, the aforementioned "corresponding data" is the PDSCH; or
other related parameters configured by a network.

One or more parameters in the examples above may be indicated via the first indication information, which provides high flexibility.

If DCI is used to transmit the first indication information, when the network aims to improve performance, it can quickly instruct the first terminal to adopt the first DMRS pattern, allowing the network to improve performance using advanced receivers (such as AI/ML receivers); when the network aims to save its power consumption and prefers a simpler receiver, it can quickly instruct the first terminal to adopt the second DMRS pattern (i.e., the orthogonal DMRS pattern).

The above Embodiment 1-1-A and Embodiment 1-1-B can be used in combination. For example, the first indication information may indicate one of N (N ≥ 3) different DMRSs. Taking N = 3 as an example, two DMRSs are orthogonal to the control information, and one DMRS is not orthogonal to the control information.

Optionally, the first indication information may be configured for different objects.

The first indication information is configured for a cell, meaning that it is information within configuration information of a control channel in a cell. Compared to other schemes, such as those targeting a PUCCH resource and a PUCCH format, this scheme can reduce signaling overhead.

The first indication information is configured for a carrier, meaning that it is information within configuration information of a control channel in a carrier. Compared to other schemes, such as those targeting a PUCCH resource and a PUCCH format, this scheme can reduce signaling overhead.

The first indication information is configured for a BWP (where the BWP refers to the BWP concept in NR), meaning that it is information within configuration information of a control channel in a BWP. Compared to other schemes, such as those targeting a CORESET or a search space, this scheme can reduce signaling overhead.

The first indication information is configured for a PSFCH, meaning that it is information within configuration information of a PSFCH. Compared to other schemes, such as those targeting a PUCCH resource and a PUCCH format, this scheme can reduce signaling overhead.

The first indication information is configured for a PUCCH resource. For example, the first indication information is information within configuration information of a PUCCH resource. For another example, the first indication information simultaneously indicates the corresponding PUCCH resource. This scheme allows for more flexible control over each PUCCH resource, providing a greater degree of freedom for network optimization.

The first indication information is configured for a PUCCH resource group, or it is information within configuration information of a PUCCH resource group. For another example, the first indication information simultaneously indicates the corresponding PUCCH resource group. This scheme allows for more flexible control over each CORESET, providing a greater degree of freedom for network optimization.

The first indication information is configured for a PUCCH format, meaning that it is information within configuration information of a PUCCH format. For another example, the first indication information simultaneously indicates the corresponding PUCCH format. This scheme allows for more flexible control over each PUCCH format, providing a greater degree of freedom for network optimization.

Optionally, the DMRS pattern indicated by the first indication information is not used in the following cases:
PUCCH format 0; and PUCCH transmission that only feeds back an ACK/NACK.

That is, in the above two cases, a system-default or pre-defined DMRS is still used. Thus, by employing the default DMRS for certain basic control channels, an ambiguous phase during different DMRS switches is avoided, and system stability is enhanced.

In this embodiment, the first terminal device, according to the first indication information, uses a corresponding DMRS for transmission on a corresponding control channel. In specific implementation, the first terminal may receive two or more pieces of first indication information. For example, one piece of the first indication information corresponds to one PUCCH format, while another piece of configuration information corresponds to another PUCCH format. Another example is that one piece of the first indication information corresponds to one PUCCH resource, while another piece of configuration information corresponds to another PUCCH resource. This can be extended to more pieces of first indication information, as it can be directly extended and is not elaborated on individually.

Optionally, in the case of a control channel with repeated transmissions (i.e., PUCCH repetition), the corresponding DMRS patterns remain the same in one or more of the following parameters:
whether the DMRS and control information use at least one same RE (i.e., at least one shared RE); whether all REs of the DMRS are simultaneously used for control information (i.e., whether all REs of the DMRS are shared REs); a same frequency-domain density; a same time-domain density; or a same power parameter.

Optionally, for a data channel (such as a PUSCH or a PSSCH), there is independent DMRS configuration information. The DMRSs corresponding to the data channel and the DMRS corresponding to the control channel maintain the same configuration in one or more of the following parameters:

In the DMRS pattern, all REs are used for data or control information transmission (i.e., all DMRS REs are shared REs); the DMRS patterns corresponding to the data channel and the control channel either both have one or more REs used for data or control information transmission (i.e., both of them include at least one shared RE), or neither has any RE used for data or control information transmission (i.e., neither of these two DMRSs has a shared RE); a same power parameter; a same sequence generation method (e.g., a single-port DMRS for a data PDSCH); a frequency-domain density; or a time-domain density.

Among the aforementioned parameters, for those that do not maintain the same configuration for the control channel and the data channel, the control channel and the data channel are independently configured.

Optionally, before the above steps, the first terminal device reports first terminal capability (i.e., the aforementioned capability information) to the first network device. The first terminal capability indicates support of the first terminal device for receiving the first indication information, wherein the first indication information indicates a first DMRS of the control channel, or the first terminal capability indicates support of the first terminal device for two or more DMRS patterns of the control channel.

Optionally, the first terminal capability is transmitted via RRC signaling or a MAC CE.

Optionally, the first terminal capability is reported per band (i.e., corresponding capabilities can be independently reported for different bands). Reporting independently across different bands allows the terminal implementation to have a greater degree of freedom. For example, the terminal may support this function on a certain band or certain bands, and not support this function on other bands, thereby enabling more terminals to support this new function.

Optionally, the first terminal capability is independently reported per band combination. Reporting independently across different band combinations allows the terminal implementation to have a greater degree of freedom. For example, the terminal may not support this function under a certain band combination, but may support it under another band combination, thereby enabling more terminals to support this new function.

Optionally, the first terminal capability is independently reported per band per band combination (i.e., reporting can be independently performed for bands in different band combinations). This allows terminal implementation to have a greater degree of freedom. For example, a terminal may not support this function under a certain CA combination, but may support it on certain bands under another CA combination, thereby enabling more terminals to support this new function.

Optionally, the first terminal capability is independently reported per CC per band per band combination (i.e., reporting can be independently performed for different CCs within bands of different band combinations, also known as feature set per component carrier (FSPC)). Reporting independently across different band combinations, as well as across different carriers on the same band allow the terminal implementation to have a greater degree of freedom, thereby enabling more terminals to support this new feature.

Optionally, the first terminal capability is reported per FR (i.e., reporting can be independently performed for different FRs, meaning that reporting is independently performed for FR1 and FR2). Reporting independently across different FRs allows terminal implementation to have a greater degree of freedom. For example, the terminal does not support this function at a low frequency (e.g., FR1), but supports this function at a high frequency (e.g., FR2), thereby enabling more terminals to support this new function.

Optionally, the first terminal capability is reported per UE, which means that if the UE reports this capability, it can be supported on all bands, reducing the signaling overhead for terminal capability reporting.

Optionally, before the aforementioned steps, the first terminal device reports second terminal capability to the first network device. The second terminal capability indicates that the first terminal device supports the first DMRS pattern of the control channel, and one or more or all of the REs of the first DMRS pattern are simultaneously used by control information (i.e., shared REs).

Optionally, the second terminal capability is transmitted via RRC signaling or a MAC CE.

Optionally, the second terminal capability is reported per band (i.e., corresponding capabilities can be independently reported for different bands). Reporting independently across different bands allows the terminal implementation to have a greater degree of freedom. For example, the terminal may support this function on a certain band or certain bands, and not support this function on other bands, thereby enabling more terminals to support this new function.

Optionally, the second terminal capability is independently reported per band combination. Reporting independently across different band combinations allows the terminal implementation to have a greater degree of freedom. For example, the terminal may not support this function under a certain band combination, but may support it under another band combination, thereby enabling more terminals to support this new function.

Optionally, the second terminal capability is independently reported per band per band combination (i.e., reporting can be independently performed for bands in different band combinations). This allows terminal implementation to have a greater degree of freedom. For example, a terminal may not support this function under a certain CA combination, but may support it for certain bands under another CA combination, thereby enabling more terminals to support this new function.

Optionally, the second terminal capability is independently reported per CC per band per band combination (i.e., reporting can be independently performed for different CCs within bands in different band combinations, also known as FSPC). Reporting independently across different band combinations, as well as across different carriers on the same band allow the terminal implementation to have a greater degree of freedom, thereby enabling more terminals to support this new feature.

Optionally, the second terminal capability is reported per FR (i.e., reporting can be independently performed for different FRs, meaning that reporting is independently performed for FR1 and FR2). Reporting independently across different FRs allows terminal implementation to have a greater degree of freedom. For example, the terminal does not support this function at a low frequency (e.g., FR1), but supports this function, at a high frequency (e.g., FR2), thereby enabling more terminals to support this new function.

Optionally, the second terminal capability is reported per UE, meaning that if the UE reports this capability, it can be supported on all bands, which can reduce the signaling overhead for terminal capability reporting.

Optionally, the first terminal capability and/or the second terminal capability further include one or more of the following capabilities (in terms of the DMRS pattern of the control channel):
a supportable power parameter; a supportable DMRS pattern; a supportable frequency-domain density of the DMRS; or a supportable time-domain density of the DMRS.

Optionally, the first terminal capability and/or the second terminal capability are reported for a PUCCH.

Optionally, the first terminal capability and/or the second terminal capability are reported for a PSFCH.

Optionally, the first terminal capability and/or the second terminal capability are independently reported for different PUCCH formats. For instance, the first terminal capability and/or the second terminal capability are reported for PUCCH format 2, while for PUCCH format 3, it is possible to report support for the first terminal capability and/or the second terminal capability, or not to report support for the first terminal capability and report no support for the second terminal capability.

### Embodiment 2

The solution according to this embodiment introduces a new PUCCH type, which means that a specific DMRS pattern is set for each PUCCH type.

It is assumed that the system supports P different PUCCH types. For simplicity of description, the solution according to this embodiment takes P = 2 (i.e., two PUCCH types) as an example, which are denoted as a first PUCCH type and a second PUCCH type, respectively. It can be easily extended to more different PUCCH types, without further elaboration. Optionally:

A DMRS pattern corresponding to the first PUCCH type (referred to as a first DMRS pattern) has one or more or all of its REs being simultaneously used by control information. In other words, the first DMRS pattern and the control information are not orthogonal in time-frequency resources, wherein the first DMRS pattern is referred to as a non-orthogonal DMRS pattern. The DMRS pattern and the control information use the same REs, allowing the control information to use more REs and thus improving transmission reliability. Alternatively, REs of the DMRS pattern corresponding to the first PUCCH type (referred to as the first DMRS pattern) are all non-overlapping with the REs used by the control information, meaning that the first DMRS uses different REs from those used by the control information, wherein the first DMRS is referred to as an orthogonal DMRS. Using the orthogonal DMRS requires fewer modifications to the existing system and is easier to implement.

REs of a DMRS pattern corresponding to the second PUCCH type (referred to as a second DMRS pattern) are all non-overlapping with REs used by control information, meaning that the second DMRS pattern uses different REs from those used by the control information. In other words, the second DMRS pattern and the control information are orthogonal in time-frequency resources, wherein the DMRS is referred to as an orthogonal DMRS).

The first PUCCH type differs from the existing PUCCH format 0 in 5G, as PUCCH format 0 in 5G does not use a DMRS pattern. Conversely, the first PUCCH type employs the DMRS pattern. One implementation involves the linear weighting (i.e., multiplication by a coefficient) and subsequent addition of the DMRS pattern and the control information on all REs used by the PUCCH, which are then transmitted via the same REs. For instance, during a specific transmission, if the first PUCCH type uses one PRB and six symbols, the control information and the DMRS pattern are present on all the REs.

The first PUCCH type and the second PUCCH type use the same amount of time-domain resources and the same amount of frequency-domain resources, wherein the time-domain/ frequency-domain resources include total time-frequency resources used by the DMRS and the control information.

The PUCCH type here may also be a PSFCH type. For simplicity, they are collectively referred to as a PUCCH type.

One possible implementation is that all the aforementioned P PUCCH types belong to the same PUCCH format (referring herein to the concept of PUCCH format in 5G/NR, such as PUCCH format 3).

A first terminal device receives second indication information transmitted by a first network device or a second terminal device (corresponding to the sidelink communication scenario), wherein the second indication information indicates whether to use the first PUCCH type or the second PUCCH type. This scheme can flexibly indicate or configure the DMRS pattern of the control channel, better match the wireless environment, and improve system performance.

If the second indication information is transmitted by the first network device, the control channel mentioned above corresponds to an uplink control channel (such as a PUCCH).

If the second indication information is transmitted by the second terminal device, the control channel mentioned above corresponds to a sidelink feedback channel (such as a PSFCH).

Optionally, the second indication information may be implemented via one or a combination of more of the following messages/signaling:
a broadcast message (MIB); a system message (SIB1); RRC signaling; MAC CE signaling; DCI signaling; a downlink message in a random access procedure, such as MsgB, Msg2, Msg3, Msg4; or AI/ML dedicated signaling.

For example, the second indication information is indicated via RRC signaling and MAC CE signaling. Another example is that the second indication information is indicated via a system message and RRC signaling. Other combinations are not listed one by one and can be directly derived.

For a scheme adopting two types of signaling/messages, it may also involve indications from a plurality of instances of the same signaling/message. For instance, the second indication information may correspond to a plurality of pieces of RRC signaling, meaning different information elements within the second indication information are indicated via different pieces of RRC signaling.

Different instances of the second indication information may indicate different DMRSs. For example, in one instance, the second indication information indicates the first PUCCH type, while in another instance, the second indication information may indicate the second PUCCH type.

Optionally, there may be at least one group of PUCCH types, wherein each group of PUCCH types includes at least one first PUCCH type and at least one second PUCCH type. For instance, when using DCI to transmit the second indication information, it may indicate a certain PUCCH type within a group of PUCCH types. For ease of description, a group consisting of the first PUCCH type and the second PUCCH type may be referred to as a first group of control channel types (e.g., a first group of PUCCH types).

Optionally, there may be a plurality of pieces of second indication information, for example, K ≥ 2 pieces of second indication information respectively indicating K groups of PUCCH types (each group of PUCCH types includes at least one first PUCCH type and at least one second PUCCH type).

Optionally, the second indication information may have at least one first field, and there may be different specific implementations:
Option 1: Whether it is the first PUCCH type or the second PUCCH type is indicated through different values. For example, when the first field takes a first value, it indicates the first PUCCH type; when the first field takes a second value, it indicates the second PUCCH type. Compared with Option 2/3, it has better flexibility because it can indicate more DMRSs, that is, it is not limited to two DMRSs.
Option 2: When the first field is configured, it indicates the first PUCCH type; when the first field is not configured, the control channel uses the second PUCCH type (i.e., implicitly indicating the second PUCCH type). In this case, the second PUCCH type is a default PUCCH type. The second PUCCH type may be determined based on pre-defined rules (such as protocol specifications) and/or network broadcast information/system information. This scheme can save signaling overhead.
   Optionally, when the first field is configured, its value may be "enabled" or "support", or its variants (e.g., related forms such as enable, supported, etc.).
Option 3: When the first field is configured, it indicates the second PUCCH type; when the first field is not configured, the control channel uses the first PUCCH type (i.e., implicitly indicating the first PUCCH type). This scheme can save signaling overhead.

For example, when the second indication information is indicated via DCI, 1 bit may be used to indicate two different PUCCH types (when more PUCCH types are to be indicated, more bits are required). Optionally, a "PUCCH resource indicator" field in the DCI is also used to indicate a corresponding PUCCH resource, and the PUCCH type indicated by the DCI is used for the PUCCH resource. A specific implementation is to pre-configure P' (P' ≤ P) PUCCH types, or configure P' (P' ≤ P) PUCCH types via RRC and/or a MAC CE, and then the DCI respectively indicates the PUCCH resource and its corresponding PUCCH type (one of the P' PUCCH types) via two corresponding fields. Optionally, the two fields may also be jointly encoded into one field, and the value of this field simultaneously indicates the PUCCH resource and one of the P' PUCCH types. The entire system can support P PUCCH types, but for a certain UE, only P' of these PUCCH types may be configured for use.

Optionally, the second indication information indicates whether it is the first PUCCH type or the second PUCCH type by configuring different fields via a CHOICE structure.

Optionally, related configurations/parameters for the first and second PUCCH types (including their corresponding DMRS configuration information) are pre-defined. The second indication information indicates whether to use the first or second PUCCH type. For example, the second indication information includes a field that indicates different PUCCH types through different values. Alternatively, different PUCCH types may be indicated by whether this field is configured or not. For instance, one implementation is that when this field is not configured, the second PUCCH type is indicated, and when it is configured, the first PUCCH type is indicated; another implementation is the opposite, where when this field is not configured, the first PUCCH type is indicated, and when it is configured, the second PUCCH type is indicated. By pre-defining these configurations, signaling overhead can be reduced.

Optionally, a related configuration/parameter of the first PUCCH type (including corresponding DMRS configuration information) is pre-defined, meaning that the first PUCCH type is a default PUCCH type; the second indication information indicates one or more parameters of the second PUCCH type. For example, the second indication information includes one or more fields, which indicate the parameters of the second PUCCH type; if this field is not configured, it corresponds to the first PUCCH type (i.e., the default PUCCH type). On the one hand, using only the default PUCCH type can reduce signaling overhead, while on the other hand, it also provides sufficient flexibility to configure another PUCCH type.

Optionally, a related configuration/parameter of the second PUCCH type (including corresponding DMRS configuration information) is pre-defined, meaning that the second PUCCH type is a default PUCCH type; the second indication information indicates one or more parameters of the first PUCCH type. For example, the second indication information includes one or more fields, which indicate the parameters of the first PUCCH type; if this field is not configured, it corresponds to the second PUCCH type (i.e., the default PUCCH type). On the one hand, using only the default PUCCH type can reduce signaling overhead, while on the other hand, it also provides sufficient flexibility to configure another PUCCH type.

Optionally, the second indication information indicates one or more parameters of the first PUCCH type, or one or more parameters of the second PUCCH type. For example, the second indication information includes one or more fields, which indicate the parameters of the first PUCCH type or the second PUCCH type. Another example is that the second indication information uses a CHOICE structure to indicate whether it is the first PUCCH type or the second PUCCH type by configuring different fields. There are two different fields in the CHOICE structure. When the first field is configured, it is used to indicate the first PUCCH format, and when the second field is configured, it is used to indicate the second PUCCH format. This scheme allows flexible configuration of each PUCCH type and provides optimization space for the system.

If the DMRS pattern used by the first PUCCH type is the orthogonal DMRS pattern:
The time-frequency resources used by the first DMRS and the second DMRS differ, meaning that at least some of the time-frequency resources used by the first DMRS pattern and the second DMRS pattern are different. For instance, they may differ (or have differences) in one or more of the following aspects:
a density in the time domain of the first DMRS pattern differs from that of the second DMRS pattern;
a density in the frequency domain of the first DMRS pattern differs from that of the second DMRS pattern;
a position in the frequency domain of the first DMRS pattern differs from that of the second DMRS pattern;
a position in the time domain of the first DMRS pattern differs from that of the second DMRS pattern;
a sequence generation parameter of the first DMRS pattern differs from that of the second DMRS pattern;
a generation method of the first DMRS pattern differs from that of the second DMRS pattern; or
a power parameter of the first DMRS pattern differs from that of the second DMRS pattern.

If the first DMRS pattern and the second DMRS pattern use different numbers of symbols in the time domain (i.e., different time-domain densities), and if DCI is used to transmit the first indication information, when the speed of the first terminal device increases, the network may quickly indicate the use of more symbols for DMRS transmission, thereby better coping with the time-varying characteristics of the channel; when the speed of the first terminal device decreases, the network may quickly indicate the use of fewer symbols for DMRS transmission, thereby allocating more symbols for the transmission of control information.

In this case, the generation methods of the first PUCCH type and the second PUCCH type are similar. Their main differences arise from the different numbers of symbols used by the DMRS and other differences caused thereby. For example, symbols used for control information vary, leading to changes in a coding rate; if spreading is required, lengths of used orthogonal sequences or orthogonal codes change accordingly. That is, steps for generating signals of the first PUCCH type and the second PUCCH type are the same, with the only difference arising from adjustments made due to the different time-frequency resources available for control information under the DMRS pattern. For example, the first PUCCH type and the second PUCCH type may adopt the same PUCCH format in existing 5G, but with different DMRS densities in the time domain. However, different PUCCH formats (such as PUCCH format 1 and PUCCH format 2) in existing 5G have different signal generation steps/methods. Therefore, the first PUCCH type and the second PUCCH type in this scheme are different concepts from different PUCCH formats in 5G. For example, all PUCCH types in the aforementioned group of PUCCH types may correspond to a certain PUCCH format in 5G (such as PUCCH format 3).

The first DMRS and/or the second DMRS may have one or more of the following parameters: a frequency-domain density; a time-domain density; a frequency-domain resource position; a time-domain resource position; a DMRS sequence generation parameter; or a power-related parameter.

If the DMRS pattern used by the first PUCCH type is a non-orthogonal DMRS pattern, this DMRS pattern may have one or more of the following parameters: a frequency-domain density; a time-domain density; a frequency-domain resource position; a time-domain resource position; a DMRS sequence generation parameter; or a power-related parameter.

Optionally, the second indication information indicates the power parameter of the first DMRS pattern, or the power parameter of the first DMRS pattern is pre-defined (e.g., pre-defined via a protocol, or pre-defined via network broadcast information, etc.). If the power parameter of the first DMRS pattern is indicated by the second indication information, the power allocation of the DMRS may be flexibly indicated, allowing the system to optimize the transmit power of the DMRS according to the wireless environment, thereby improving system performance. If the power parameter of the first DMRS pattern is pre-defined, signaling overhead can be saved.

Optionally, the power parameter indicates, on a shared RE,
a ratio of transmit power of the DMRS on the shared RE to total power (i.e., total power of the DMRS and the data) on the shared RE; or
a ratio of transmit power of the data on the shared RE to total power (i.e., total power of the DMRS and the data) on the shared RE; or
a ratio of transmit power of the DMRS on the shared RE to data power on the shared RE; or
a ratio of transmit power of the data on the shared RE to DMRS power on the shared RE; or
a proportion of transmit power of the DMRS to total power on a single RE (i.e., regardless of whether this RE is shared or not).

The aforementioned ratio may be expressed either as a linear value or as a dB value. For instance, a linear value of 0.1 corresponds to a dB value of -10dB or 10dB.

Optionally, the second indication information indicates the frequency-domain resource density and/or frequency-domain resource position of the DMRS corresponding to the first DMRS pattern, or the frequency-domain resource density and/or frequency-domain resource position of the DMRS corresponding to the first DMRS pattern is pre-defined (e.g., pre-defined via a protocol, or pre-defined via network broadcast information, etc.). This scheme allows for flexible changes to the frequency-domain resource position of the first DMRS, thereby facilitating multi-user reuse and reducing DMRS interference among users.

For example, the second indication information may indicate a density of the DMRS in the frequency domain corresponding to the first DMRS pattern (e.g., indicating how many REs are occupied in one RB), and/or an offset value of the DMRS in the frequency domain corresponding to the first DMRS pattern (e.g., an RE offset value). Alternatively, the second indication information may indicate which frequency-domain resources (e.g., REs, RBs) are occupied by the DMRS corresponding to the first DMRS pattern, either through a bitmap approach or by directly indicating numbers (or indexes) of the frequency-domain resources. This scheme offers high flexibility.

For another example, as an alternative implementation, the second indication information may directly indicate which one of frequency-domain patterns the first DMRS pattern adopts. These candidate frequency-domain patterns are determined by pre-defined rules and/or network configuration. One of these frequency-domain patterns identifies which resources on the frequency domain can be used for DMRS transmission. This scheme has lower signaling overhead.

For another example, as another implementation, a frequency-domain pattern is pre-defined. As long as the second indication information indicates the first DMRS pattern, this pre-defined frequency-domain pattern is adopted.

Optionally, the second indication information indicates the time-domain density and/or time-domain resource position of the DMRS corresponding to the first DMRS pattern. For example, the second indication information indicates the time-domain density of the DMRS corresponding to the first DMRS pattern, that is, it indicates that the DMRS corresponding to the first DMRS pattern is transmitted on one symbol out of every Z symbols. Another example is that the second indication information indicates which symbols (such as which symbols within a slot) are used for the DMRS corresponding to the first DMRS pattern, either through a bitmap or by directly indicating the symbol numbers (or indexes). This scheme can flexibly change the time-domain density and/or time-domain resource position of the first DMRS, achieving a good compromise between performance and complexity.

For another example, as another implementation, the second indication information may directly indicate which one of time-domain patterns the first DMRS pattern adopts, where these candidate time-domain patterns are determined by pre-defined rules and/or network configuration. Two of these time-domain patterns identify which symbols carry the DMRS. This scheme has lower signaling overhead.

Optionally, the second indication information indicates the sequence generation parameter of the first DMRS pattern.

Optionally, generation of a sequence for the first DMRS pattern is based on one or more of the following parameters:
a slot number of a slot where the DMRS is currently located;
a symbol index of a symbol where the DMRS is currently located, or an internal index of a symbol where the first DMRS is currently located within a slot;
an SFN of a system frame where the DMRS is currently located;
a cell identity of a cell where the DMRS is currently located, or a PCI of a cell where the DMRS is currently located;
a carrier index of a carrier where the DMRS is currently located (referring herein to a carrier in CA, namely a CC, or simply a carrier);
different port numbers of the DMRS (for example, sequence generation corresponding to a first DMRS port i is based on a port number i);
an index corresponding to a control channel that schedules corresponding data (such as a group index corresponding to a CORESET); or
other related parameters configured by a network.

One or more parameters in the examples above may be indicated via the second indication information, which can improve flexibility.

If DCI is used to transmit the second indication information, when the network aims to improve performance, it can quickly instruct the first terminal to adopt the first PUCCH type (i.e., the non-orthogonal DMRS pattern), allowing the network to improve performance using advanced receivers (such as AI/ML receivers); when the network aims to save its power consumption and prefers a simpler receiver, it can quickly instruct the first terminal to adopt the second PUCCH type (i.e., the orthogonal DMRS pattern).

For example, the second indication information may indicate one of N ≥ 3 different PUCCH types. Taking P = 3 as an example, there are two second PUCCH types (i.e., their corresponding DMRSs are orthogonal to control information), and one first PUCCH type (i.e., its corresponding DMRS is not orthogonal to control information).

Based on any of the above, the second indication information may be configured for different objects, such as:
The second indication information is configured for a cell, meaning that it is information within configuration information of a control channel of a cell. Compared to other schemes, such as those targeting a PUCCH resource and a PUCCH format, this scheme can reduce signaling overhead.

The second indication information is configured for a carrier, meaning that it is information within configuration information of a control channel in a carrier. Compared to other schemes, such as those targeting a PUCCH resource and a PUCCH format, this scheme can reduce signaling overhead.

The second indication information is configured for a BWP (where the BWP refers to the BWP concept in NR), meaning that it is information within configuration information of a control channel in a BWP. Compared to other schemes, such as those targeting a CORESET and a search space, this scheme can reduce signaling overhead.

The second indication information is configured for a PSFCH, meaning it is information within configuration information of a PSFCH channel. Compared to other schemes, such as those targeting a PUCCH resource and a PUCCH format, this scheme can reduce signaling overhead.

The second indication information is configured for a PUCCH type group. For example, the second indication information is information within configuration information of a PUCCH type group. Another example is that the second indication information simultaneously indicates the corresponding PUCCH type group, allowing for more flexible control over each PUCCH type group and providing a greater degree freedom for network optimization.

The second indication information is configured for a PUCCH resource group, or the second indication information is information within configuration information of a PUCCH resource group. For another example, the second indication information simultaneously indicates the corresponding PUCCH resource group, allowing for more flexible control over each CORESET, providing a greater degree of freedom for network optimization.

The second indication information is configured for a PUCCH resource, meaning that it is information within configuration information of a PUCCH resource. For another example, the second indication information simultaneously indicates the corresponding PUCCH resources, allowing for more flexible control over each PUCCH resource and providing a greater degree of freedom for network optimization.

The second indication information is configured for a PUCCH format, meaning that it is information within configuration information of a PUCCH format. For another example, the second indication information simultaneously indicates the corresponding PUCCH format, allowing for more flexible control over each PUCCH format and providing a greater degree of freedom for network optimization.

Among them, the first terminal device, based on the second indication information, uses a corresponding DMRS pattern for control channel transmission.

Optionally, in the case of a control channel with repeated transmissions (i.e., PUCCH repetition, PSFCH repetition), the PUCCH type and the DMRS remain the same in one or more of the following parameters:

whether the DMRS and control information use at least one same RE (i.e., at least one shared RE); whether all REs of the DMRS are simultaneously used for control information (i.e., whether all REs of the DMRS are shared REs); a frequency-domain density of the DMRS; a time-domain density of the DMRS; or a power parameter of the DMRS; or a same PUCCH type.

Optionally, before the above steps, the first terminal device reports third terminal capability to the first network device, wherein the third terminal capability indicates support of the first terminal device for receiving the second indication information, wherein the second indication information indicates the first PUCCH type or the second PUCCH type, or the first terminal capability indicates support of the first terminal device for both the first PUCCH type and the second PUCCH type.

Optionally, the third terminal capability may be transmitted via RRC signaling or a MAC CE.

Optionally, the third terminal capability is reported per band (i.e., corresponding capabilities can be independently reported for different bands).

Optionally, the third terminal capability is independently reported per band combination.

Optionally, the third terminal capability is independently reported per band per band combination (i.e., reporting can be independently performed for bands in different band combinations).

Optionally, the third terminal capability is independently reported per CC per band per band combination (i.e., reporting can be independently performed for different CCs within bands of different band combinations, also known as FSPC).

Optionally, the third terminal capability is reported per FR (i.e., reporting can be independently performed for different FRs, meaning that reporting is independently performed for FR1 and FR2).

Optionally, the third terminal capability is reported per UE, meaning that if the UE reports this capability, it can be supported on all bands).

Optionally, before the aforementioned steps, the first terminal device reports fourth terminal capability to the first network device. The fourth terminal capability indicates that the first terminal device supports the first PUCCH type, wherein one or more or all of REs of the first DMRS corresponding to the first PUCCH type are simultaneously used by control information (i.e., shared REs).

Optionally, the fourth terminal capability is transmitted via RRC signaling or a MAC CE.

Optionally, the fourth terminal capability is reported for per band (i.e., corresponding capabilities can be independently reported for different bands).

Optionally, the fourth terminal capability is independently reported per band combination.

Optionally, the fourth terminal capability is independently reported per band per band combination (i.e., reporting can be independently performed for bands in different band combinations).

Optionally, the fourth terminal capability is independently reported per CC per band per band combination (i.e., reporting can be independently performed for different CCs within bands of different band combinations, also known as FSPC).

Optionally, the fourth terminal capability is reported per FR (i.e., reporting can be independently performed for different FRs, meaning that reporting is independently performed for FR1 and FR2).

Optionally, the fourth terminal capability is reported UE, meaning that if the UE reports this capability, it can be supported on all bands).

Optionally, the third terminal capability and/or the fourth terminal capability also include one or more of the following capabilities (in terms of the DMRS of the PUCCH type):
a supportable power parameter; a supportable DMRS pattern; a supportable frequency-domain density of the DMRS; or a supportable time-domain density of the DMRS.

Optionally, the third terminal capability and/or the fourth terminal capability are reported for a PUCCH.

Optionally, the third terminal capability and/or the fourth terminal capability are reported for a PSFCH.

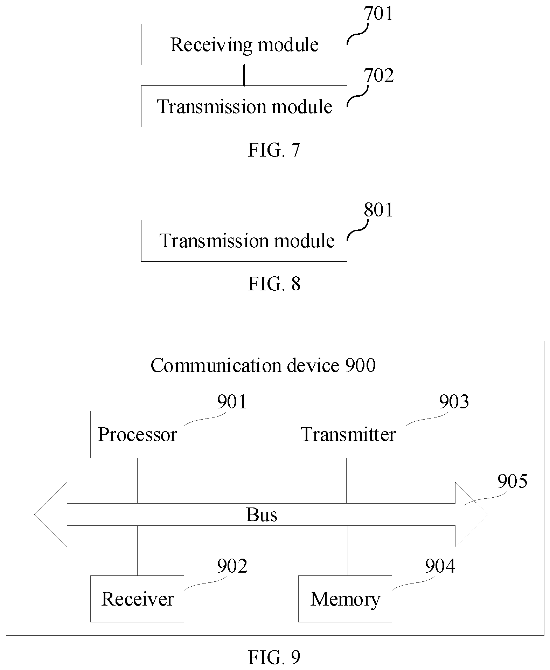

Referring to FIG. 7, it is a block diagram of an apparatus for control channel transmission according to an embodiment of the present disclosure. The apparatus for control channel transmission is capable of implementing the functions executed by the first device in any of the methods shown in FIGS. 3 to 6 mentioned above. As shown in FIG. 7, the apparatus may include:
a receiving module 701, configured to receive indication information, wherein the indication information is used to indicate a first DMRS pattern or a first control channel type, wherein the first control channel type corresponds to the first DMRS pattern, and the first DMRS pattern is one of a plurality of DMRS patterns; and
a transmission module 702, configured to transmit a control channel according to a DMRS pattern indicated by the indication information.

In some embodiments, the indication information is carried in at least one of:
a broadcast message; a system message; RRC signaling; a MAC CE; DCI signaling; a downlink message in a random access procedure; or AI/ML dedicated signaling.

In some embodiments, the indication information is used to indicate, for a control channel format and/or a control channel resource, the first DMRS pattern or the first control channel type corresponding to the control channel;
the transmission module 702 is configured to transmit the control channel in accordance with the control channel format and/or the control channel resource based on the DMRS pattern indicated by the indication information.

In some embodiments, each of the plurality of DMRS patterns is an orthogonal DMRS pattern; or
at least one of the plurality of DMRS patterns is a non-orthogonal DMRS pattern.

In some embodiments, each of the plurality of DMRS patterns has one or more of following parameters:
a frequency-domain density of a time-frequency resource used by a DMRS; a time-domain density of a time-frequency resource used by a DMRS; a frequency-domain resource position of a time-frequency resource used by a DMRS; a time-domain resource position of a time-frequency resource used by a DMRS; a DMRS sequence generation parameter; a DMRS sequence generation method; or a power parameter.

In some embodiments, values of all or part of the parameters differ between any two of the plurality of DMRS patterns.

In some embodiments, in a case where at least one of the plurality of DMRS patterns is the non-orthogonal DMRS pattern and where the non-orthogonal DMRS pattern has a power-related parameter, the power parameter of the non-orthogonal DMRS pattern is used to indicate at least one of following parameters on a shared RE:
a ratio of transmit power of a DMRS on the shared RE to total transmit power on the shared RE;
a ratio of transmit power of data on the shared RE to total transmit power on the shared RE;
a ratio of transmit power of a DMRS on the shared RE to transmit power of data on the shared RE;
a ratio of transmit power of data on the shared RE to transmit power of a DMRS on the shared RE; or
a ratio of transmit power of a DMRS on an RE to total transmit power on the RE.

In some embodiments, the indication information is further used to indicate a frequency-domain resource density and/or a frequency-domain resource position of a DMRS in the first DMRS pattern; or
a frequency-domain resource density and/or a frequency-domain resource position of a DMRS in the first DMRS pattern is pre-defined.

In some embodiments, the indication information is further used to indicate a time-domain resource density and/or a time-domain resource position of a DMRS in the first DMRS pattern; or
a time-domain resource density and/or a time-domain resource position of a DMRS in the first DMRS pattern is pre-defined.

In some embodiments, the indication information is further used to indicate a sequence generation parameter of the first DMRS pattern.

In some embodiments, the sequence generation parameter includes at least one of:
a slot number of a slot where a DMRS is located; a symbol index of a symbol where a DMRS is located, or an internal index of a symbol where a DMRS is located within a slot; a SFN of a system frame where a DMRS is located; a cell identity of a cell where a DMRS is located, or a PCI of a cell where a DMRS is located; a carrier index of a carrier where a DMRS is located; a port number of a DMRS; an index corresponding to a data scheduling control channel, wherein feedback information of data scheduled by the data scheduling control channel is carried by the control channel; a DMRS scrambling parameter; or other related parameters configured by a network.

In some embodiments, the indication information is configured for a cell; or
the indication information is configured for a carrier; or
the indication information is configured for a BWP; or
the indication information is configured for a PSFCH; or
the indication information is configured for a PUCCH resource; or
the indication information is configured for a PUCCH resource group; or
the indication information is configured for a PUCCH format.

In some embodiments, the DMRS pattern indicated by the indication information is not used for PUCCH format 0; or
the DMRS pattern indicated by the indication information is not used for PUCCH transmission that only feeds back an ACK/NACK.

In some embodiments, for a control channel with repeated transmissions, one or more of following parameters of a DMRS corresponding to each transmission are the same:
whether the DMRS and control information use at least one same RE;
whether all REs corresponding to the DMRS are simultaneously used for control information;
a frequency-domain density of a time-frequency resource used by the DMRS;
a time-domain density of a time-frequency resource used by the DMRS; or
a power parameter.

In some embodiments, configuration information of the plurality of DMRS patterns is the same as DMRS configuration information of a data channel in terms of one or more of following parameters: a power parameter; a DMRS sequence generation method; a frequency-domain density of a time-frequency resource used by a DMRS; or a time-domain density of a time-frequency resource used by a DMRS.

In some embodiments, the apparatus further includes:
a transmission module, configured to report capability information to a second device;
wherein the capability information is used to indicate at least one of: support of the first device for receiving the indication information; the plurality of DMRS patterns supported by the first device; a plurality of control channel types supported by the first device; support of the first device for a non-orthogonal DMRS; or support of the first device for the first DMRS pattern or the first control channel type.

In some embodiments, the capability information is reported via at least one of:
RRC signaling, or a MAC CE.

In some embodiments, the capability information is reported per band;
the capability information is independently reported per band combination;
the capability information is independently reported per band per band combination;
the capability information is independently reported per CC per band per band combination;
the capability information is reported per FR; or
the capability information is reported per UE.

In some embodiments, the capability information further includes at least one of: a supported power parameter; a supported frequency-domain density of a time-frequency resource used by a DMRS; or a supported time-domain density of a time-frequency resource used by a DMRS.

Referring to FIG. 8, it is a block diagram of an apparatus for control channel transmission according to an embodiment of the present disclosure. This apparatus for control channel transmission is capable of implementing the functions executed by the second device in any of the methods shown in FIGS. 3 to 6 mentioned above. As shown in FIG. 8, the apparatus may include:
a transmitting module 801, configured to transmit indication information to a first device, wherein the indication information is used to indicate a first DMRS pattern or a first control channel type, wherein the first control channel type corresponds to the first DMRS pattern, the first DMRS pattern is one of a plurality of DMRS patterns, and the indication information is used to instruct the first device to transmit a control channel according to a DMRS pattern indicated by the indication information.

In some embodiments, the indication information is carried in at least one of:
a broadcast message; a system message; RRC signaling; a MAC CE; DCI signaling; a downlink message in a random access procedure; or AI/ML dedicated signaling.

In some embodiments, the indication information is used to indicate, for a control channel format and/or a control channel resource, the first DMRS pattern or the first control channel type corresponding to the control channel.

In some embodiments, each of the plurality of DMRS patterns is an orthogonal DMRS pattern; or
at least one of the plurality of DMRS patterns is a non-orthogonal DMRS pattern.

In some embodiments, each of the plurality of DMRS patterns has one or more of following parameters:
a frequency-domain density of a time-frequency resource used by a DMRS; a time-domain density of a time-frequency resource used by a DMRS; a frequency-domain resource position of a time-frequency resource used by a DMRS; a time-domain resource position of a time-frequency resource used by a DMRS; a DMRS sequence generation parameter; a DMRS sequence generation method; or a power parameter.

In some embodiments, values of all or part of the parameters differ between any two of the plurality of DMRS patterns.

In some embodiments, in a case where at least one of the plurality of DMRS patterns is the non-orthogonal DMRS pattern and where the non-orthogonal DMRS pattern has a power-related parameter, the power parameter of the non-orthogonal DMRS pattern is used to indicate at least one of following parameters on a shared RE:
a ratio of transmit power of a DMRS on the shared RE to total transmit power on the shared RE;
a ratio of transmit power of data on the shared RE to total transmit power on the shared RE;
a ratio of transmit power of a DMRS on the shared RE to transmit power of data on the shared RE;
a ratio of transmit power of data on the shared RE to transmit power of a DMRS on the shared RE; or
a ratio of transmit power of a DMRS on an RE to total transmit power on the RE.

In some embodiments, the indication information is further used to indicate a frequency-domain resource density and/or a frequency-domain resource position of a DMRS in the first DMRS pattern; or
a frequency-domain resource density and/or a frequency-domain resource position of a DMRS in the first DMRS pattern is pre-defined.

In some embodiments, the indication information is further used to indicate a time-domain resource density and/or a time-domain resource position of a DMRS in the first DMRS pattern; or
a time-domain resource density and/or a time-domain resource position of a DMRS in the first DMRS pattern is pre-defined.

In some embodiments, the indication information is further used to indicate a sequence generation parameter of the first DMRS pattern.

In some embodiments, the sequence generation parameter includes at least one of:
a slot number of a slot where a DMRS is located; a symbol index of a symbol where a DMRS is located, or an internal index of a symbol where a DMRS is located within a slot; a SFN of a system frame where a DMRS is located; a cell identity of a cell where a DMRS is located, or a PCI of a cell where a DMRS is located; a carrier index of a carrier where a DMRS is located; a port number of a DMRS; an index corresponding to a data scheduling control channel, wherein feedback information of data scheduled by the data scheduling control channel is carried by the control channel; a DMRS scrambling parameter; or other related parameters configured by a network.

In some embodiments, the indication information is configured for a cell; or
the indication information is configured for a carrier; or
the indication information is configured for a BWP; or
the indication information is configured for a PSFCH; or
the indication information is configured for a PUCCH resource; or
the indication information is configured for a PUCCH resource group; or
the indication information is configured for a PUCCH format.

In some embodiments, the DMRS pattern indicated by the indication information is not used for PUCCH format 0; or
the DMRS pattern indicated by the indication information is not used for PUCCH transmission that only feeds back an ACK/NACK.

In some embodiments, for a control channel with repeated transmissions, one or more of following parameters of a DMRS corresponding each transmission are the same:
whether the DMRS and control information use at least one same RE; whether all REs corresponding to the DMRS are simultaneously used for control information; a frequency-domain density of a time-frequency resource used by the DMRS; a time-domain density of a time-frequency resource used by the DMRS; or a power parameter.

In some embodiments, configuration information of the plurality of DMRS patterns is the same as DMRS configuration information of a data channel in terms of one or more of following parameters: a power parameter; a DMRS sequence generation method; a frequency-domain density of a time-frequency resource used by a DMRS; or a time-domain density of a time-frequency resource used by a DMRS.

In some embodiments, the apparatus further includes:
a receiving module, configured to receive capability information reported by the first device;
wherein the capability information is used to indicate at least one of:
   support of the first device for receiving the indication information;
   the plurality of DMRS patterns supported by the first device;
   a plurality of control channel types supported by the first device;
   support of the first device for a non-orthogonal DMRS; or
   support of the first device for the first DMRS pattern or the first control channel type.

In some embodiments, the capability information is reported via at least one of:
RRC signaling, or a MAC CE.

In some embodiments, the capability information is reported per band;
the capability information is independently reported per band combination;
the capability information is independently reported per band per band combination;
the capability information is independently reported per CC per band per band combination;
the capability information is reported per FR; or
the capability information is reported per UE.

In some embodiments, the capability information further includes at least one of: a supported power parameter; a supported frequency-domain density of a time-frequency resource used by a DMRS; or a supported time-domain density of a time-frequency resource used by a DMRS.

It should be noted that in the implementation of the functions of the apparatus according to the above embodiments, the division of various functional modules is merely exemplified. In practical applications, the aforementioned functions can be allocated to different functional modules according to actual needs, that is, the internal structure of the apparatus can be divided into different functional modules to fulfill all or part of the functions described above.

Regarding the apparatus in the above embodiments, the specific ways in which each module performs operations have been described in detail in the embodiments related to the method, and are not be elaborated on here.

Referring to FIG. 9, it illustrates the structural schematic diagram of a communication device 900 according to an embodiment of the present disclosure. The communication device 900 may include: a processor 901, a receiver 902, a transmitter 903, a memory 904, and a bus 905.

The processor 901 includes one or more processing cores, and executes various functional applications and information processing by running software programs and modules.

The receiver 902 and the transmitter 903 may be implemented as a communication component, which may be a communication chip. This communication chip may also be referred to as a transceiver. The memory 904 is connected to the processor 901 via the bus 905. The memory 904 may be used to store computer programs, and the processor 901 is used to execute these computer programs, thereby implementing the various steps in the method embodiments as described above.

In addition, the memory 904 may be implemented by any type of volatile or non-volatile storage device, or a combination thereof. Volatile or non-volatile storage devices include, but are not limited to: magnetic or optical disks, electrically erasable programmable read-only memory (EEPROM), erasable programmable read-only memory (EPROM), static random access memory (SRAM), read-only memory (ROM), magnetic memory, flash memory, and programmable read-only memory (PROM).

In an exemplary embodiment, when the communication device 900 is implemented as the first device, the computer program is run by the receiver 902 and processor 901, enabling the communication device to perform the steps executed by the first device in any of the methods shown in FIGS. 3 to 6.

In an exemplary embodiment, when the communication device 900 is implemented as the second device, the computer program is run by the transmitter 903 and processor 901, enabling the communication device to perform the steps executed by the second device in any of the methods shown in FIGS. 3 to 6.

The embodiments of the present disclosure further provide a computer-readable storage medium, in which a computer program is stored. The computer program, when loaded and run by a processor, causes the processor to perform all or part of the steps executed by the first device or the second device in any of the methods shown in FIGS. 3 to 6 described above.

The present disclosure further provides a chip including an integrated circuit and firmware arranged in the integrated circuit. The chip, when running in a communication device, causes the communication device to perform all or part of the steps executed by the first device or the second device in any of the methods shown in FIGS. 3 to 6 described above.

The present disclosure also provides a computer program product. The computer program product or computer program includes one or more computer instructions stored in a computer-readable storage medium. The one or more computer instructions, when read from the computer-readable storage medium and executed by a processor of a communication device, cause the communication device to perform all or part of the steps executed by the first device or the second device in the method shown in any of FIGS. 3 to 6 described above.

The present disclosure also provides a computer program that, when executed by a processor of a communication device, causes the communication device to perform all or part of the steps executed by the first device or the second device in the method shown in any of FIGS. 3 to 6 described above.

A person skilled in the art should be aware that in the foregoing one or more examples, the functions described in the embodiments of the present disclosure may be implemented by hardware, software, firmware, or any combination thereof. The functions, when implemented by software, may be stored in a computer-readable medium or transmitted as at least one instruction or code on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely exemplary embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A method for control channel transmission, performed by a first device, the method comprising:
receiving indication information, wherein the indication information is used to indicate a first demodulation reference signal, DMRS, pattern or a first control channel type, wherein the first control channel type corresponds to the first DMRS pattern, and the first DMRS pattern is one of a plurality of DMRS patterns; and
transmitting a control channel according to a DMRS pattern indicated by the indication information.

2. The method according to claim 1, wherein the indication information is carried in at least one of:
a broadcast message;
a system message;
radio resource control, RRC, signaling;
a medium access control, MAC, control element, CE;
downlink control information, DCI, signaling;
a downlink message in a random access procedure; or
artificial intelligence, AI/machine learning, ML, dedicated signaling.

3. The method according to claim 1 or 2, wherein
the indication information is used to indicate, for a control channel format and/or a control channel resource, the first DMRS pattern or the first control channel type corresponding to the control channel; and
transmitting the control channel according to the DMRS pattern indicated by the indication information comprises:
transmitting the control channel in accordance with the control channel format and/or the control channel resource based on the DMRS pattern indicated by the indication information.

4. The method according to any one of claims 1 to 3, wherein
each of the plurality of DMRS patterns is an orthogonal DMRS pattern; or
at least one of the plurality of DMRS patterns is a non-orthogonal DMRS pattern.

5. The method according to claim 4, wherein each of the plurality of DMRS patterns has one or more of following parameters:
a frequency-domain density of a time-frequency resource used by a DMRS;
a time-domain density of a time-frequency resource used by a DMRS;
a frequency-domain resource position of a time-frequency resource used by a DMRS;
a time-domain resource position of a time-frequency resource used by a DMRS;
a DMRS sequence generation parameter;
a DMRS sequence generation method; or
a power parameter.

6. The method according to claim 5, wherein values of all or part of the parameters differ between any two of the plurality of DMRS patterns.

7. The method according to any one of claims 4 to 6, wherein in a case where at least one of the plurality of DMRS patterns is the non-orthogonal DMRS pattern and where the non-orthogonal DMRS pattern has a power-related parameter, the power parameter of the non-orthogonal DMRS pattern is used to indicate at least one of following parameters on a shared resource element, RE:
a ratio of transmit power of a DMRS on the shared RE to total transmit power on the shared RE;
a ratio of transmit power of data on the shared RE to total transmit power on the shared RE;
a ratio of transmit power of a DMRS on the shared RE to transmit power of data on the shared RE;
a ratio of transmit power of data on the shared RE to transmit power of a DMRS on the shared RE; or
a ratio of transmit power of a DMRS on an RE to total transmit power on the RE.

8. The method according to any one of claims 1 to 7, wherein
the indication information is further used to indicate a frequency-domain resource density and/or a frequency-domain resource position of a DMRS in the first DMRS pattern; or
a frequency-domain resource density and/or a frequency-domain resource position of a DMRS in the first DMRS pattern is pre-defined.

9. The method according to any one of claims 1 to 8, wherein
the indication information is further used to indicate a time-domain resource density and/or a time-domain resource position of a DMRS in the first DMRS pattern; or
a time-domain resource density and/or a time-domain resource position of a DMRS in the first DMRS pattern is pre-defined.

10. The method according to any one of claims 1 to 9, wherein the indication information is further used to indicate a sequence generation parameter of the first DMRS pattern.

11. The method according to claim 10, wherein the sequence generation parameter comprises at least one of:
a slot number of a slot where a DMRS is located;
a symbol index of a symbol where a DMRS is located, or an internal index of a symbol where a DMRS is located within a slot;
a system frame number, SFN, of a system frame where a DMRS is located;
a cell identity of a cell where a DMRS is located, or a physical cell identity, PCI, of a cell where a DMRS is located;
a carrier index of a carrier where a DMRS is located;
a port number of a DMRS;
an index corresponding to a data scheduling control channel, wherein feedback information of data scheduled by the data scheduling control channel is carried by the control channel;
a DMRS scrambling parameter; or
other related parameters configured by a network.

12. The method according to any one of claims 1 to 11, wherein
the indication information is configured for a cell; or
the indication information is configured for a carrier; or
the indication information is configured for a bandwidth part, BWP; or
the indication information is configured for a physical sidelink feedback channel, PSFCH; or
the indication information is configured for a physical uplink control channel, PUCCH, resource; or
the indication information is configured for a PUCCH resource group; or
the indication information is configured for a PUCCH format.

13. The method according to any one of claims 1 to 12, wherein,
the DMRS pattern indicated by the indication information is not used for physical uplink control channel, PUCCH, format 0; or
the DMRS pattern indicated by the indication information is not used for PUCCH transmission that only feeds back an acknowledgment, ACK/negative acknowledgment, NACK.

14. The method according to any one of claims 1 to 13, wherein for a control channel with repeated transmissions, one or more of following parameters of a DMRS corresponding to each transmission are the same:
whether the DMRS and control information use at least one same resource element, RE;
whether all REs corresponding to the DMRS are simultaneously used for control information;
a frequency-domain density of a time-frequency resource used by the DMRS;
a time-domain density of a time-frequency resource used by the DMRS; or
a power parameter.

15. The method according to any one of claims 1 to 14, wherein configuration information of the plurality of DMRS patterns is the same as DMRS configuration information of a data channel in terms of one or more of following parameters:
a power parameter;
a DMRS sequence generation method;
a frequency-domain density of a time-frequency resource used by a DMRS; or
a time-domain density of a time-frequency resource used by a DMRS.

16. The method according to any one of claims 1 to 15, further comprising:
reporting capability information to a second device;
wherein the capability information is used to indicate at least one of:
support of the first device for receiving the indication information;
the plurality of DMRS patterns supported by the first device;
a plurality of control channel types supported by the first device;
support of the first device for a non-orthogonal DMRS; or
support of the first device for the first DMRS pattern or the first control channel type.

17. The method according to claim 16, wherein the capability information is reported via at least one of:
radio resource control, RRC, signaling, or a medium access control, MAC, control element, CE.

18. The method according to claim 16 or 17, wherein
the capability information is reported per band;
the capability information is independently reported per band combination;
the capability information is independently reported per band per band combination;
the capability information is independently reported per component carrier, CC, per band per band combination;
the capability information is reported per frequency range, FR; or
the capability information is reported per UE.

19. The method according to any one of claims 16 to 18, wherein the capability information further comprises at least one of:
a supported power parameter;
a supported frequency-domain density of a time-frequency resource used by a DMRS; or
a supported time-domain density of a time-frequency resource used by a DMRS.

20. A method for control channel transmission, performed by a second device, the method comprising:
transmitting indication information to a first device, wherein the indication information is used to indicate a first demodulation reference signal, DMRS, pattern or a first control channel type, wherein the first control channel type corresponds to the first DMRS pattern, the first DMRS pattern is one of a plurality of DMRS patterns, and the indication information is used to instruct the first device to transmit a control channel according to a DMRS pattern indicated by the indication information.

21. The method according to claim 20, wherein the indication information is carried in at least one of:
a broadcast message;
a system message;
radio resource control, RRC, signaling;
a medium access control, MAC, control element, CE;
downlink control information, DCI, signaling;
a downlink message in a random access procedure; or
artificial intelligence, AI/machine learning, ML, dedicated signaling.

22. The method according to claim 20, wherein
the indication information is used to indicate, for a control channel format and/or a control channel resource, the first DMRS pattern or the first control channel type corresponding to the control channel.

23. The method according to any one of claims 20 to 22, wherein
each of the plurality of DMRS patterns is an orthogonal DMRS pattern; or
at least one of the plurality of DMRS patterns is a non-orthogonal DMRS pattern.

24. The method according to claim 23, wherein each of the plurality of DMRS patterns has one or more of following parameters:
a frequency-domain density of a time-frequency resource used by a DMRS;
a time-domain density of a time-frequency resource used by a DMRS;
a frequency-domain resource position of a time-frequency resource used by a DMRS;
a time-domain resource position of a time-frequency resource used by a DMRS;
a DMRS sequence generation parameter;
a DMRS sequence generation method; or
a power parameter.

25. The method according to claim 24, wherein values of all or part of the parameters differ between any two of the plurality of DMRS patterns.

26. The method according to any one of claims 23 to 25, wherein in a case where at least one of the plurality of DMRS patterns is the non-orthogonal DMRS pattern and where the non-orthogonal DMRS pattern has a power-related parameter, the power parameter of the non-orthogonal DMRS pattern is used to indicate at least one of following parameters on a shared resource element, RE:
a ratio of transmit power of a DMRS on the shared RE to total transmit power on the shared RE;
a ratio of transmit power of data on the shared RE to total transmit power on the shared RE;
a ratio of transmit power of a DMRS on the shared RE to transmit power of data on the shared RE;
a ratio of transmit power of data on the shared RE to transmit power of a DMRS on the shared RE; or
a ratio of transmit power of a DMRS on an RE to total transmit power on the RE.

27. The method according to any one of claims 20 to 26, wherein
the indication information is further used to indicate a frequency-domain resource density and/or a frequency-domain resource position of a DMRS in the first DMRS pattern; or
a frequency-domain resource density and/or a frequency-domain resource position of a DMRS in the first DMRS pattern is pre-defined.

28. The method according to any one of claims 20 to 27, wherein
the indication information is further used to indicate a time-domain resource density and/or a time-domain resource position of a DMRS in the first DMRS pattern; or
a time-domain resource density and/or a time-domain resource position of a DMRS in the first DMRS pattern is pre-defined.

29. The method according to any one of claims 20 to 28, wherein the indication information is further used to indicate a sequence generation parameter of the first DMRS pattern.

30. The method according to claim 29, wherein the sequence generation parameter comprises at least one of:
a slot number of a slot where a DMRS is located;
a symbol index of a symbol where a DMRS is located, or an internal index of a symbol where a DMRS is located within a slot;
a system frame number, SFN, of a system frame where a DMRS is located;
a cell identity of a cell where a DMRS is located, or a physical cell identity, PCI, of a cell where a DMRS is located;
a carrier index of a carrier where a DMRS is located;
a port number of a DMRS;
an index corresponding to a data scheduling control channel, wherein feedback information of data scheduled by the data scheduling control channel is carried by the control channel;
a DMRS scrambling parameter; or
other related parameters configured by a network.

31. The method according to any one of claims 20 to 30, wherein
the indication information is configured for a cell; or
the indication information is configured for a carrier; or
the indication information is configured for a bandwidth part, BWP; or
the indication information is configured for a physical sidelink feedback channel, PSFCH; or
the indication information is configured for a physical uplink control channel, PUCCH, resource; or
the indication information is configured for a PUCCH resource group; or
the indication information is configured for a PUCCH format.

32. The method according to any one of claims 20 to 31, wherein
the DMRS pattern indicated by the indication information is not used for physical uplink control channel, PUCCH, format 0; or
the DMRS pattern indicated by the indication information is not used for PUCCH transmission that only feeds back an acknowledgment, ACK/negative acknowledgment, NACK.

33. The method according to any one of claims 20 to 32, wherein for a control channel with repeated transmissions, one or more of following parameters of a DMRS corresponding to each transmission are the same:
whether the DMRS and control information use at least one same resource element, RE;
whether all REs corresponding to the DMRS are simultaneously used for control information;
a frequency-domain density of a time-frequency resource used by the DMRS;
a time-domain density of a time-frequency resource used by the DMRS; or
a power parameter.

34. The method according to any one of claims 20 to 33, wherein configuration information of the plurality of DMRS patterns is the same as DMRS configuration information of a data channel in terms of one or more of following parameters:
a power parameter;
a DMRS sequence generation method;
a frequency-domain density of a time-frequency resource used by a DMRS; or
a time-domain density of a time-frequency resource used by a DMRS.

35. The method according to any one of claims 20 to 34, further comprising:
receiving capability information reported by the first device;
the capability information is used to indicate at least one of:
support of the first device for receiving the indication information;
the plurality of DMRS patterns supported by the first device;
a plurality of control channel types supported by the first device;
support of the first device for a non-orthogonal DMRS; or
support of the first device for the first DMRS pattern or the first control channel type.

36. The method according to claim 35, wherein the capability information is reported via at least one of:
radio resource control, RRC, signaling, or a medium access control, MAC, control element, CE.

37. The method according to claim 35 or 36, wherein
the capability information is reported per band;
the capability information is independently reported per band combination;
the capability information is independently reported per band per band combination;
the capability information is independently reported per component carrier, CC, per band per band combination;
the capability information is reported per frequency range, FR; or
the capability information is reported per UE.

38. The method according to any one of claims 35 to 37, wherein the capability information further comprises at least one of:
a supported power parameter;
a supported frequency-domain density of a time-frequency resource used by a DMRS; or
a supported time-domain density of a time-frequency resource used by a DMRS.

39. An apparatus for control channel transmission, comprising:
a receiving module, configured to receive indication information, wherein the indication information is used to indicate a first demodulation reference signal, DMRS, pattern or a first control channel type, wherein the first control channel type corresponds to the first DMRS pattern, and the first DMRS pattern is one of a plurality of DMRS patterns; and
a transmission module, configured to transmit a control channel according to a DMRS pattern indicated by the indication information.

40. An apparatus for control channel transmission, comprising:
a transmitting module, configured to transmit indication information to a first device, wherein the indication information is used to indicate a first demodulation reference signal, DMRS, pattern or a first control channel type, wherein the first control channel type corresponds to the first DMRS pattern, the first DMRS pattern is one of a plurality of DMRS patterns, and the indication information is used to instruct the first device to transmit a control channel according to a DMRS pattern indicated by the indication information.

41. A communication device, wherein the terminal device comprises a processor, a memory, and a transceiver;
the memory stores a computer program, wherein the computer program, when run by the processor, causes the network device to perform the method for control channel transmission as defined in any one of claims 1 to 19.

42. A computer-readable storage medium, storing a computer program, wherein the computer program, when run by a processor of a communication device, causes the communication device to perform the method for control channel transmission as defined in any one of claims 1 to 38.

43. A chip, comprising an integrated circuit and firmware arranged in the integrated circuit, wherein the chip, when running in a communication device, causes the communication device to perform the method for control channel transmission as defined in any one of claims 1 to 38.

44. A computer program product, comprising one or more computer instructions stored in a computer-readable storage medium, wherein the one or more computer instructions, when read from the computer-readable storage medium and executed by a processor of a communication device, cause the communication device to perform the method for control channel transmission as defined in any one of claims 1 to 38.

45. A computer program, wherein the computer program, when run by a processor of a communication device, causes the communication device to perform the method for control channel transmission as defined in any one of claims 1 to 38.
